# EUROPÄISCHE PATENTSCHRIFT

(11) **EP 3 084 169 B1**
(45) Veröffentlichungstag und Bekanntmachung des Hinweises auf die Patenterteilung: **05.08.2020**
(21) Anmeldenummer: 14815390.1
(22) Anmeldetag: 19.12.2014
(51) Int. Cl.: F02B 63/04, H02K 7/18, B60K 6/485, B60W 20/00

(54) **HUBKOLBENMOTOR**
RECIPROCATING PISTON ENGINE
MOTEUR À PISTONS ALTERNATIFS

(30) Priorität: 20.12.2013 EP 13199214; 27.06.2014 EP 14174743; 27.06.2014 EP 14174734; 27.06.2014 EP 14174744
(43) Veröffentlichungstag der Anmeldung: 26.10.2016
(73) Patentinhaber: HVD AG, 9495 Triesen (LI)
(72) Erfinder: SCHUTTENBACH VON, Andreas, D-85051 Ingolstadt (DE); GRABHER, Karl-Heinz, CH-FL-9490 Vaduz (LI)
(74) Vertreter: Kaminski Harmann
(86) Internationale Anmeldenummer: PCT/EP2014/078924
(87) Internationale Veröffentlichungsnummer: WO 2015/092053

(56) Entgegenhaltungen:
- DE-A1- 19 729 550
- DE-A1-102005 019 019
- DE-C1- 10 201 601
- FR-A1- 2 877 057
- US-A1- 2003 051 679
- US-A1- 2012 032 441
- US-A1- 2013 231 809

## Beschreibung

Die vorliegende Erfindung betrifft einen Hubkolbenmotor mit einem elektromechanischen Wandler, der als elektrischer Generator und/oder als Elektromotor betreibbar ist, und ein System mit einem Hubkolbenmotor.

In der EP 1 223 316 B1 wird ein Hubkolbenmotor offenbart, in dessen Kurbelkammer ein elektromechanischer Wandler angeordnet ist, der die Funktionen eines Elektromotors und/oder eines elektrischen Generators aufweist. An einer Kurbelwelle, die mittels eines an einem Zylinderblock angebrachten Lagerdeckels drehbar in der Kurbelkammer gehalten ist, sind magnetfelderzeugende Elemente in Form von Permanentmagneten angeordnet. Die Permanentmagnete sind fest durch einen Presssitz in Ausnehmungen der Ausgleichsgewichte der Kurbelwelle eingesetzt und dienen als zusätzliche Ausgleichsgewichte. An dem Lagerdeckel sind in der Kurbelkammer Spulen feststehend gehalten. Bei Rotation der Kurbelwelle drehen sich die Permanentmagnete relativ zu den feststehenden Spulen, wodurch aufgrund der elektromagnetischen Wechselwirkung zwischen den Permanentmagneten und den Spulen eine Spannung in den Spulen induziert wird und der elektromechanische
Wandler als ein Generator wirkt. Durch Speisen der Spulen mit einer Wechselspannung, insbesondere von einer Batterie, wird auf die Permanentmagnete eine elektromagnetische Kraft ausgeübt und durch die elektromagnetische Wechselwirkung wirkt der elektromechanische Wandler als ein Elektromotor. Da die Spulen an dem Lagerdeckel gehalten sind, können die Spulen zusammen mit dem Lagerdeckel an dem Zylinderblock angebracht werden und von demselben abgenommen werden, was eine einfache Montage und Demontage oder Austausch der Spulen ermöglicht. Zudem wird beschrieben, dass die Spulen zur besseren Kühlung im Bereich der Ölwanne der Kurbelkammer angeordnet und in das in der Ölwanne enthaltene Öl eingetaucht sind, wodurch eine Kühlung der Spulen durch das Öl ermöglicht wird.

Bei dem aus dem Stand der Technik bekannten Hubkolbenmotor sind die magnetfelderzeugenden Elemente in Form von Permanentmagneten in den Ausgleichsgewichten der Kurbelwelle angeordnet, indem sie mittels Presssitz in Ausnehmungen der Ausgleichsgewichte fixiert sind. Die Anordnung der Permanentmagnete in den vorgesehenen Ausnehmungen der Ausgleichsgewichte hat den Vorteil, dass die Permanentmagnete als zusätzliche Ausgleichsgewichte dienen und somit eine zusätzliche Gewichtszunahme der Kurbelwelle durch die Permanentmagnete gegenüber einer konventionellen Kurbelwelle vermieden werden kann. Diese Anordnung hat jedoch auch mehrere Nachteile. Kurbelwellen sind in der Regel einstückig ausgebildet und werden entweder im Gießverfahren insbesondere aus Kugelgraphitguss, Vergütungs- oder Nitrierstahl gefertigt oder im Druckumformverfahren geschmiedet. Die für Herstellung von hoch belastbaren Kurbelwellen geeigneten und in der Großserie heute zum Einsatz kommenden Materialen magnetisierbar. In anderen Worten weisen konventionelle Kurbelwellen ferromagnetische oder ferrimagnetische Eigenschaften auf. Sie werden also vom Magnetpol eines äußeren Magnetfelds angezogen, ohne dass eine hohe Restmagnetisierung zurückbleibt, in anderen Worten sind sie weichmagnetisch, oder sie verursachen selbst nach einer Magnetisierung ein statisches Magnetfeld, da sie hartmagnetisch sind und eine hohe Remanenz aufweisen. Konventionelle Kurbelwellen eignen sich nur bedingt zur Anordnung von Permanentmagneten in Ausnehmungen von Ausgleichsgewichten mittels Presssitz, da die Permanentmagnete eine Magnetisierung der gesamten Kurbelwelle hervorrufen und die Erzeugung eines definiert verlaufenden, gerichteten Magnetfeldes zur effizienten Induktion einer Spannung in den die Kurbelwelle umgebenden Spulen nicht möglich ist. Zudem besteht die Gefahr einer Entmagnetisierung der Permanentmagnete. Die in der EP 1 223 316 B1 beschriebene Anordnung weist systembedingt eine geringe elektrische Leistung aufgrund der Anordnung der Permanentmagneten auf. Da sich ein Kurbelwellen-Ausgleichsgewicht zur Erfüllung seiner gattungsgemäßen Funktion nur in einem dem benachbarten Pleuellager gegenüberliegenden Bereich erstreckt, der in der Regel deutlich unter 120° und somit weniger als ein Drittel des Rotationsumfangs umfasst, können die Permanentmagneten im Ausgleichsgewicht auch nur in diesem Teilbereich angeordnet werden, wodurch die elektrische Maximalleistung des elektromechanischen Wandlers erheblich begrenzt wird. Zudem ist die Anordnung der Permanentmagnete mittels Presssitz in der Kurbelwelle aus produktionstechnischen Gründen aufwändig und es besteht das Risiko, dass sich die Permanentmagneten bei hohen Kurbelwellendrehzahlen lösen. Eine weitere Brennkraftmaschine ist aus FR2877057 bekannt.

Die der Erfindung zugrunde liegende Aufgabe besteht darin, einen Hubkolbenmotor mit integriertem elektromechanischen Wandler zu schaffen, der sich durch eine erhöhte elektrische Leistung, einen einfachen Aufbau und eine vereinfachte Wartbarkeit auszeichnet und der auf einem konventionellen, nicht-elektrifizierten und nur geringfügig angepassten Hubkolbenmotor basieren kann.

Diese Aufgabe wird durch die Verwirklichung der Merkmale des unabhängigen Anspruchs 1 gelöst. Merkmale, die die Erfindung in vorteilhafter Weise weiterbilden, sind den abhängigen Patentansprüchen zu entnehmen.

Die Erfindung umfasst ein System gemäß Anspruchs 1.

Die Steuerungseinheit des Systems ist derart mit dem elektrischen Energiespeicher, dem ersten elektromechanischen Wandler und, sofern ein solcher vorhanden ist, dem zweiten oder jedem weiteren elektromechanischen Wandler elektrisch verschaltet und derart ausgebildet, insbesondere derart programmiert, dass der Hubkolbenmotor zwischen einer Elektromotorbetriebsart und einer Generatorbetriebsart umschaltbar ist.

In der Elektromotorbetriebsart ist die Kurbelwelle durch Entladen des elektrischen Energiespeichers elektromotorisch antreibbar, indem eine Spannung an den mindestens einen elektromechanischen Wandler, genauer an dessen mindestens eine Spuleneinheit, angelegt wird, so dass der Wandler als Elektromotor wirkt. In der Generatorbetriebsart ist der elektrische Energiespeicher durch mechanisches Antreiben der Kurbelwelle aufladbar, nämlich durch verbrennungsmotorisches Antreiben der Kurbelwelle mittels des Hubkolbenmotors oder externes Antreiben der Kurbelwelle, beispielsweise mittels der Fahrzeugräder beim Verzögern des Fahrzeugs. Das Umschalten kann automatisch in Abhängigkeit von der Betriebart des Hubkolbenmotors, dessen verbrennungsmotorischen Leistung, dem Ladezustand des elektrischen Energiespeichers und/oder einer externen Benutzervorgabe erfolgen. Derartige automatische Umschaltsysteme sind insbesondere aus dem Bereich der Hybridfahrzeugtechnik bekannt.

Der Hubkolbenmotor besitzt einen derart ausgebildeten elektrisch ansteuerbaren variablen Auslassventiltrieb für mindestens ein erstes Auslassventil, welches einem ersten Verbrennungsraum eines mit dem mindestens einen ersten Pleuel gekoppelten ersten Kolbens zugeordnet ist, dass das mindestens eine erste Auslassventil unabhängig von der Stellung der Kurbelwelle öffenbar ist. Derartige variable und frei ansteuerbare Ventiltriebe, insbesondere elektromechanische, elektromagnetische oder pneumatische Ventiltriebe zum Öffnen und Schließen der Ein- und/oder Auslassventile eines Hubkolbenmotors sind in unterschiedlichen Ausführungsformen aus dem Stand der Technik bekannt.

Erfindungsgemäß ist die Steuerungseinheit derart mit dem Kurbelwellensensor und dem variablen Auslassventiltrieb verschaltet und derart ausgebildet, insbesondere derart programmiert, dass das mindestens eine erste Auslassventil in der Elektromotorbetriebsart in einem Positionsbereich der Kurbelwelle, in welchem sich der erste Kolben in einen Verdichtungstakt befindet, geöffnet ist. Insbesondere ist das erste Auslassventil während des gesamten Verdichtungstaktes und Ausstoßtakts des Kolbens, alternativ während eines Großteils des jeweiligen Takts, insbesondere mindestens 35%, 50%, 75% oder 90% des Taktes gemessen am Hub des Kolbens, geöffnet, so dass der Hubkolbenmotor elektromotorisch mit reduziertem Widerstand antreibbar ist. Insbesondere ist die Steuerungseinheit derart programmiert, dass das Auslassventil bei einem Winkelstellungsbereich der Kurbelwelle, welcher dem Verdichtungstakt und Ausstoßtakt entspricht, geöffnet ist oder wird. Dieser Aspekt der Erfindung ist erfindungsgemäß nicht nur mit dem erfindungsgemäßen beschriebenen Hubkolbenmotor, sondern allgemein in Kombination mit einem Hubkolbenmotor anwendbar, der eine beliebige Kurbelwelle aufweist, die mit einem beliebigen elektromechanischen Wandler, insbesondere einem Elektromotor oder einem elektrischen Generator, mechanisch gekoppelt ist, wobei die Kurbelwelle von dem elektromechanischen Wandler in einer Elektromotorbetriebsart antreibbar ist.

Unter einem Verdichtungstakt ist allgemein ein Takt zu verstehen, in welchem das Volumen im Brennraum reduziert wird, während unter einem Expansionstakt allgemein ein Takt gemeint ist, in welchem das Volumen im Brennraum vergrößert wird. In der Regel bewegt sich der Kolben bei einem Verdichtungstakt auf das Ein- bzw. das Auslassventil zu und weg von der Kurbelwelle, während sich der Kolben bei einem Expansionstakt von den Ventilen weg und hin zur Kurbelwelle bewegt. Somit umfassen die vier Takte eines 4-Takt-Motors zwei Verdichtungstakte und zwei Expansionstakte, während die zwei Takte des 2-Takt-Motors einen Verdichtungstakt und einen Expansionstakt beinhaltet. Vorzugsweise handelt es sich bei dem erfindungsgemäßen Hubkolbenmotor um einen 4-Takt-Motor.

Die Eine Weiterbildung der Erfindung sieht vor, dass der Hubkolbenmotor einen derart ausgebildeten elektrisch ansteuerbaren variablen Einlassventiltrieb für mindestens ein erstes Einlassventil, welches einem ersten Verbrennungsraum eines mit dem mindestens einen ersten Pleuel gekoppelten ersten Kolbens zugeordnet ist, dass das mindestens eine erste Einlassventil unabhängig von der Stellung der Kurbelwelle öffenbar ist. Die Steuerungseinheit ist derart mit dem Kurbelwellensensor und einem variablen Einlassventiltrieb verschaltet und derart ausgebildet, insbesondere derart programmiert, dass das mindestens eine erste Einlassventil in der Elektromotorbetriebsart in einem Positionsbereich der Kurbelwelle, in welchem sich der erste Kolben in einen Expansionstakt befindet, geöffnet ist. Die Einlassventilsteuerung kann der oben beschriebenen Auslassventilsteuerung entsprechen.

Die beschriebene Auslassventilsteuerung und die beschriebene Einlassventilsteuerung sind vorzugsweise miteinander kombiniert. Dies bedeutet, dass der Hubkolbenmotor in der Elektromotorbetriebsart in jedem Expansionstakt über das geöffnete Einlassventil Luft ansaugt und diese Luft in jedem Verdichtungstakt über das Auslassventil ausgestoßen wird. Somit entspricht die Ventilsteuerung des insbesondere als 4-Takt-Motor ausgebildeten Hubkolbenmotors in der ) Elektromotorbetriebsart einem 2-Takt-Motor. In anderen Worten ist die Steuerungseinheit derart mit dem Kurbelwellensensor, dem variablen Einlassventiltrieb und dem variablen Auslassventiltrieb verschaltet und derart ausgebildet, insbesondere derart programmiert, dass in der ) Elektromotorbetriebsart das mindestens eine erste Einlassventil in einem Positionsbereich der Kurbelwelle, in welchem sich der erste Kolben in einen Expansionstakt befindet, geöffnet ist und das mindestens eine erste Auslassventil in der Elektromotorbetriebsart in einem Positionsbereich der Kurbelwelle, in welchem sich der erste Kolben in einen Verdichtungstakt befindet, geöffnet ist, oder in anderen Worten der Einlassventiltrieb und der Auslassventiltrieb in einem 2-Takt-Betrieb laufen.

Erfindungsgemäß ist die Steuerungseinheit derart ausgebildet, dass ein regelmäßiges Umschalten zwischen der Elektromotorbetriebsart und der Generatorbetriebsart erfolgt. Dieses Umschalten erfolgt nach einer bestimmten Anzahl an Umdrehungen der Kurbelwelle.

Im Einzelnen zeigen:
- Figur 1a: ein erstes Beispiel eines Hubkolbenmotors mit geschlossenen ringförmigen inneren Permanentmagneteinheiten und kreisbogenförmigen äußeren Spuleneinheiten in einer Schrägansicht;
- Figur 1b: das erste Beispiel, eingebunden in ein System, in einer vorderen Querschnittsansicht;
- Figur 1c: das erste Ausführungsbeispiel mit dem Kolben im unteren Totpunkt in einer seitlichen Querschnittsansicht;
- Figur 1d: das erste Beispiel mit dem Kolben im oberen Totpunkt in einer seitlichen Querschnittsansicht;
- Figur 1e: die Kurbelwelle des ersten Beispiels ohne Ausgleichsgewichte in einer Schrägansicht;
- Figur 1f: ein Ausgleichsgewicht des ersten Ausführungsbeispiels in einer Schrägansicht;
- Figur 1g: die Kurbelwelle des ersten Beispiels mit Ausgleichsgewichten in einer Schrägansicht;
- Figur 1h: die Kurbelwelle des ersten Beispiels mit Ausgleichsgewichten und den ringförmigen inneren Permanentmagneteinheiten in einer Schrägansicht;
- Figur 1i: die ringförmige innere Permanentmagneteinheit des ersten Beispiels mit aneinandergrenzend angeordneten ersten Permanentmagneten mit in eine gemeinsame Umfangsrichtung weisenden Nordpolen in einer Schrägansicht;
- Figur 1j: die kreisbogenförmige äußere Spuleneinheit des ersten Ausführungsbeispiels mit einem zweiten Mittelpunktswinkel von 180° mit einer zweiten Spule mit einer parallel zu der Kurbelwellenachse verlaufenden zweiten Spulenachse in einer Schrägansicht;
- Figur 2a: eine erste alternative Form der Kurbelwelle mit kreisbogenförmigen inneren Permanentmagneteinheiten mit einem ersten Mittelpunktswinkel von 180° in einer Schrägansicht;
- Figur 2b: die kreisbogenförmige innere Permanentmagneteinheit der ersten alternativen Form der Kurbelwelle mit einem ersten Mittelpunktswinkel von 180° in einer Schrägansicht;
- Figur 3a: ein Beispiel eines Hubkolbenmotors mit geschlossenen ringförmigen inneren Permanentmagneteinheiten und kreisbogenförmigen äußeren Spuleneinheiten in einer Schrägansicht;
- Figur 3b: die Kurbelwelle des zweiten Beispiels mit Ausgleichsgewichten und den ringförmigen inneren Permanentmagneteinheiten in einer Schrägansicht;
- Figur 3c: die ringförmige innere Permanentmagneteinheit des zweiten Beispiels mit aneinandergrenzend angeordneten ersten Permanentmagneten mit in radiale Richtung weisenden Polen mit abwechselnder Polungsausrichtung in einer Schrägansicht;
- Figur 3d: die kreisbogenförmige äußere Spuleneinheit des zweiten Ausführungsbeispiels mit einem zweiten Mittelpunktswinkel von 180° mit einer zweiten Spule mit einer in Kreisumfangsrichtung verlaufenden zweiten Spulenachse in einer Schrägansicht;
- Figur 4a: ein drittes Beispiel Hubkolbenmotors mit geschlossenen ringförmigen inneren Permanentmagneteinheiten und geschlossenen ringförmigen äußeren Spuleneinheiten in einer Schrägansicht;
- Figur 4b: die Kurbelwelle des dritten Beispiels mit Ausgleichsgewichten und den ringförmigen inneren Permanentmagneteinheiten in einer Schrägansicht;
- Figur 4c: die ringförmige innere Permanentmagneteinheit des dritten Beispiels mit aneinandergrenzend angeordneten ersten Permanentmagneten mit in radiale Richtung weisenden Polen mit abwechselnder Polungsausrichtung in einer Schrägansicht;
- Figur 4d: die ringförmige äußere Spuleneinheit des dritten Beispiels mit in Kreisumfangsrichtung aneinander gereihten zweiten Spulen mit in Bezug auf die Kurbelwellenachse radial verlaufenden zweiten Spulenachsen in einer seitlichen Querschnittsansicht;
- Figur 5a: ein viertes Beispiel Hubkolbenmotors mit geschlossenen ringförmigen inneren Permanentmagneteinheiten und geschlossenen ringförmigen äußeren Spuleneinheiten in einer Schrägansicht;
- Figur 5b: die ringförmige äußere Spuleneinheit des vierten Beispiels mit einer zweiten Spule mit einer parallel zu der Kurbelwellenachse verlaufenden zweiten Spulenachse in einer Schrägansicht;
- Figur 6: eine zweite alternative Form mit einer ringförmigen inneren Spuleneinheit mit in Kreisumfangsrichtung aneinander gereihten ersten Spulen mit in Bezug auf die Kurbelwellenachse radial verlaufenden ersten Spulenachsen, sowie mit einer ringförmigen äußeren Permanentmagneteinheit mit aneinandergrenzend angeordneten zweiten Permanentmagneten mit in radiale Richtung weisenden Polen mit abwechselnder Polungsausrichtung in einer seitlichen Querschnittsansicht;
- Figur 7a: eine dritte alternative Form mit einer ringförmigen inneren Spuleneinheit mit in Kreisumfangsrichtung aneinander gereihten ersten Spulen mit in Bezug auf die Kurbelwellenachse radial verlaufenden ersten Spulenachsen, sowie mit einer ringförmigen äußeren Spuleneinheit mit in Kreisumfangsrichtung aneinander gereihten zweiten Spulen mit in Bezug auf die Kurbelwellenachse radial verlaufenden zweiten Spulenachsen in einer seitlichen Querschnittsansicht; und
- Figur 7b: eine mit einer ersten Spule verbundene Zusatzspule der inneren Spuleneinheit und eine seitliche Spule in einer Querschnittsdarstellung A-A aus Figur 7a.

In der folgenden Figurenbeschreibung wird zum Teil auf die erneute Erläuterung bereits zuvor genannter Bezugszeichen und Merkmale verzichtet und es wird teilweise nur auf die Unterschiede der einzelnen Beispiele eingegangen.

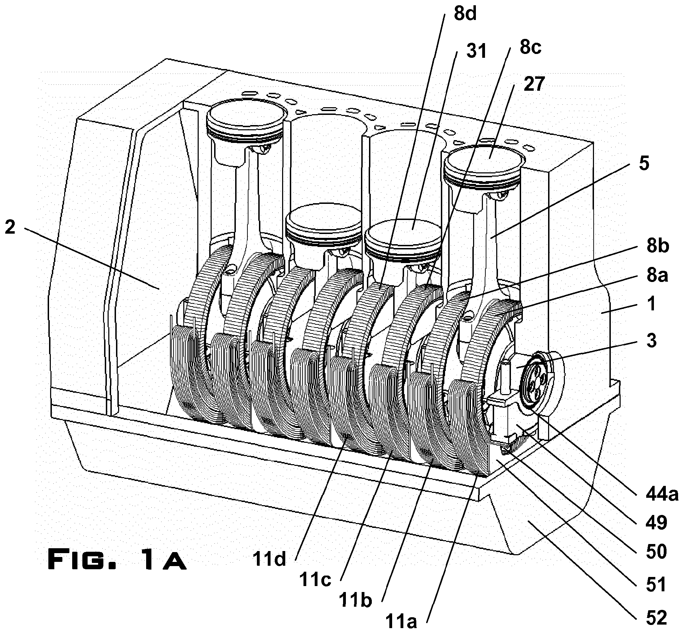

In den Figuren 1a bis 1j ist ein erstes Beispiel eines Hubkolbenmotors aus unterschiedlichen Ansichten und in unterschiedlichen Detaillierungsgraden dargestellt. Diese Figuren werden im Folgenden gemeinsam erläutert.

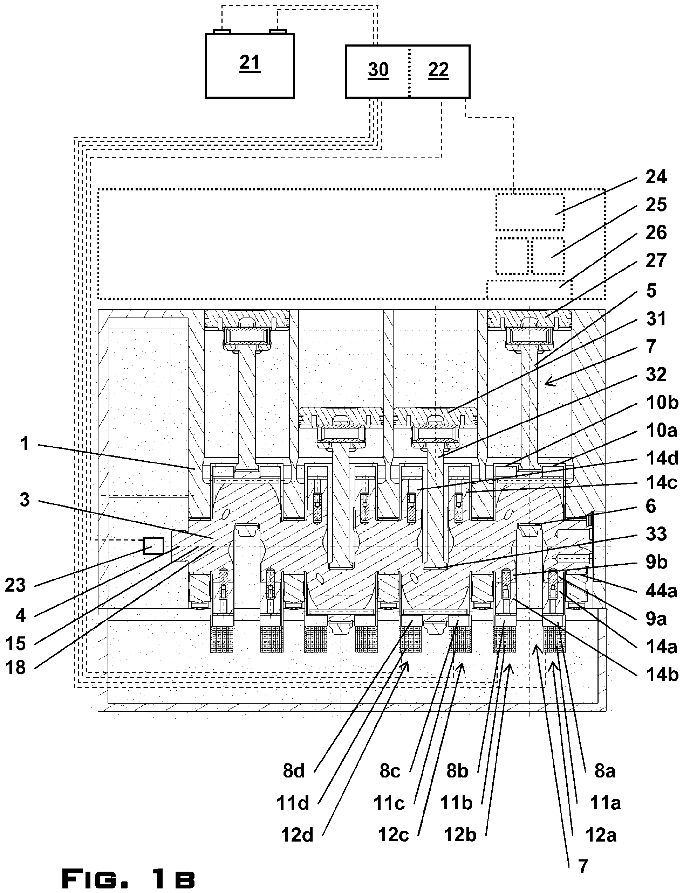

Der Hubkolbenmotor des ersten Beispiels ist ein Vierzylinder-Reihenmotor, der nach dem Otto-Prinzip arbeitet, wie in Figur 1a und 1b gezeigt. Der Hubkolbenmotor setzt sich im Wesentlichen aus einem Zylinderblock 1, einer teilweise in dem Zylinderblock 1 ausgeformten Kurbelkammer 2, die unten von einer Ölwanne 52 begrenzt wird, einer Kurbelwelle 3, sowie vier Kolben 27 und 31, die mittels vier Pleuel 5 und 32 mit der Kurbelwelle 3 verbunden sind, zusammen. Im Folgenden werden zur Vereinfachung zum Teil nur der erste Kolben 27 und der zweite Kolben 31 sowie deren Peripherie beschrieben.

Die Kurbelwelle 3 ist innerhalb der Kurbelkammer 2 in insgesamt fünf Hauptlagern 44a und 44b um eine geometrische Kurbelwellenachse 4 rotierbar angeordnet und wird dort mittels fünf Lagerdeckeln 49, die mittels Lagerdeckelschrauben 50 am Zylinderblock 1 fixiert sind, dargestellt in Figur 1a, gehalten.

Die Kurbelwelle 3 ist einstückig aus einem magnetisierbaren Werkstoff ausgebildet.

Der erste Pleuel 5 ist drehbar in einem ersten Pleuellager 6 der Kurbelwelle 3 gelagert und führt bei Rotation der Kurbelwelle 3 eine Pleuelbewegung in einem geometrischen Pleuelbewegungsraum 7 durch. Der erste Kolben 27 ist in einem Pleuelauge des ersten Pleuels 5 gelagert, wie in den Figuren 1a und 1b gezeigt.

Der zweite Pleuel 32 ist drehbar in einem zweiten Pleuellager 33 der Kurbelwelle 3 gelagert und führt bei Rotation der Kurbelwelle 3 ebenfalls eine Pleuelbewegung in einem geometrischen Pleuelraum durch.

Nämliches gilt für die weiteren Pleuel, Pleuellager und Kolben. Im Folgenden wird deren Anordnung zum Teil nur anhand des ersten Pleuels 5, des ersten Pleuellagers 6 und des ersten Kolbens 27 beschrieben.

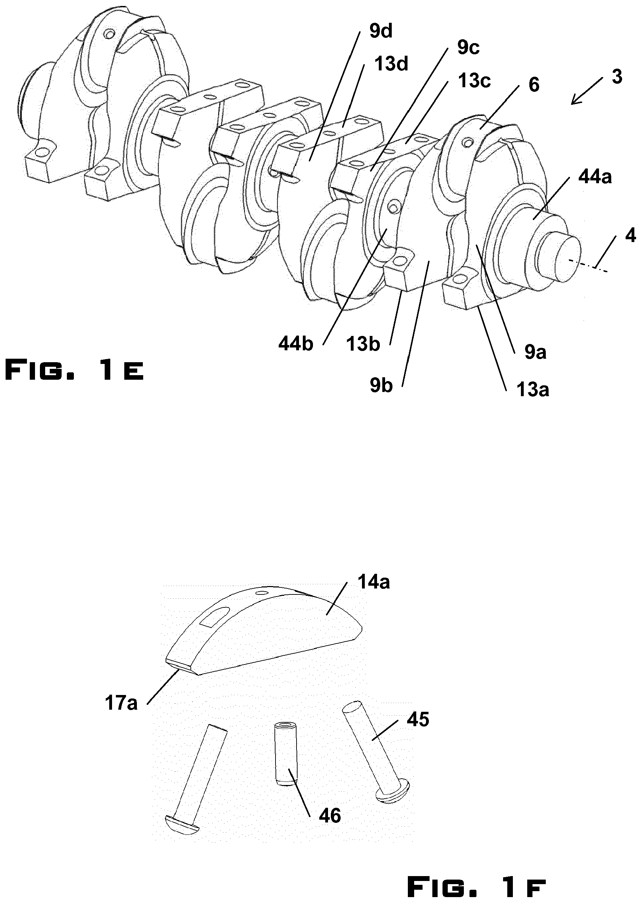

Das erste Pleuellager 6 der Kurbelwelle 3 ist über eine erste Kurbelwange 9a mit dem benachbarten ersten Hauptlager 44a und über eine der ersten Kurbelwange 9a gegenüberliegende zweite Kurbelwange 9b mit dem zweiten Hauptlager 44b verbunden, wobei die Kurbelwangen 9a und 9b den radialen Versatz des ersten Pleuellagers 6 in Bezug auf die Kurbelwellenachse 4 bewirken, wie in Figur 1e gezeigt.

Die erste Kurbelwange 9a hat auf einer in Bezug zu der Kurbelwellenachse 4 radial nach außen weisenden und dem ersten Pleuellager 6 gegenüberliegenden Seite eine erste Befestigungsfläche 13a. Auch die zweite Kurbelwange 9b besitzt auf einer in Bezug zu der Kurbelwellenachse 4 radial nach außen weisenden und dem ersten Pleuellager 6 gegenüberliegenden Seite eine zweite Befestigungsfläche 13b, wie in Figur 1e dargestellt. Die Befestigungsflächen 13a und 13b, welche dem ersten Pleuellager 6 gegenüberliegen, sind eben und liegen auf einer gemeinsamen Ebene. Entsprechend liegen auch den restlichen Pleuellagern der Kurbelwelle 3 jeweils zwei Befestigungsflächen gegenüber, wie beispielsweise dem zweiten Pleuellager 33 mit der dritten Kurbelwange 9c die dritte Befestigungsfläche 13c und mit der vierten Kurbelwange 9d die vierte Befestigungsfläche 13c, entsprechend Figur 1e.

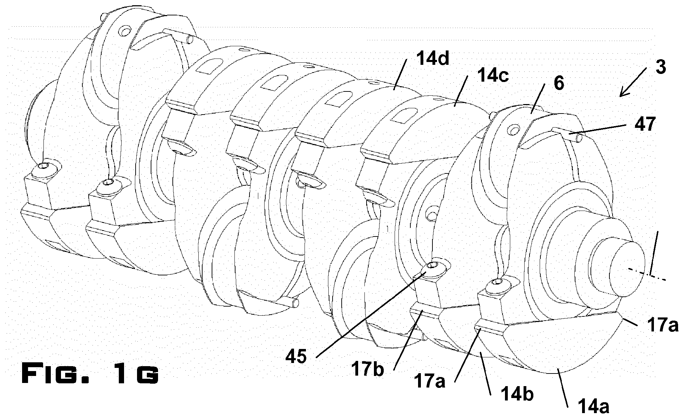

An der ersten Befestigungsfläche 13a ist ein erstes Ausgleichsgewicht 14a, an der zweiten Befestigungsfläche 13b ein zweites Ausgleichsgewicht 14b, an der dritten Befestigungsfläche 13c ein drittes Ausgleichsgewicht 14c und an der vierten Befestigungsfläche 13d ein viertes Ausgleichsgewicht 14d in radiale Richtung formschlüssig fixiert. Gleiches gilt für die übrigen Befestigungsflächen. Die formschlüssige Fixierung der Ausgleichsgewichte 14a, 14b, 14c und 14d an den Befestigungsflächen 13a, 13b, 13c und 13d erfolgt jeweils mittels zweier Ausgleichsgewichtsschrauben 45, wobei das jeweilige Ausgleichsgewicht 14a, 14b, 14c und 14d mittels eines Zentrierbolzens 46 auf der jeweiligen Befestigungsflächen 13a, 13b, 13c und 13d zentriert wird, wie in den Figuren 1f und 1g gezeigt. Die Ausgleichsgewichte 14a, 14b, 14c und 14d bestehen, wie auch die übrigen Ausgleichsgewichte, aus einem nichtmagnetisierbaren Werkstoff, beispielsweise Gusseisen, Edelstahl, Kohlefaser, einem keramischen Werkstoff oder Aluminium. Alle Ausgleichsgewichte entsprechen einander.

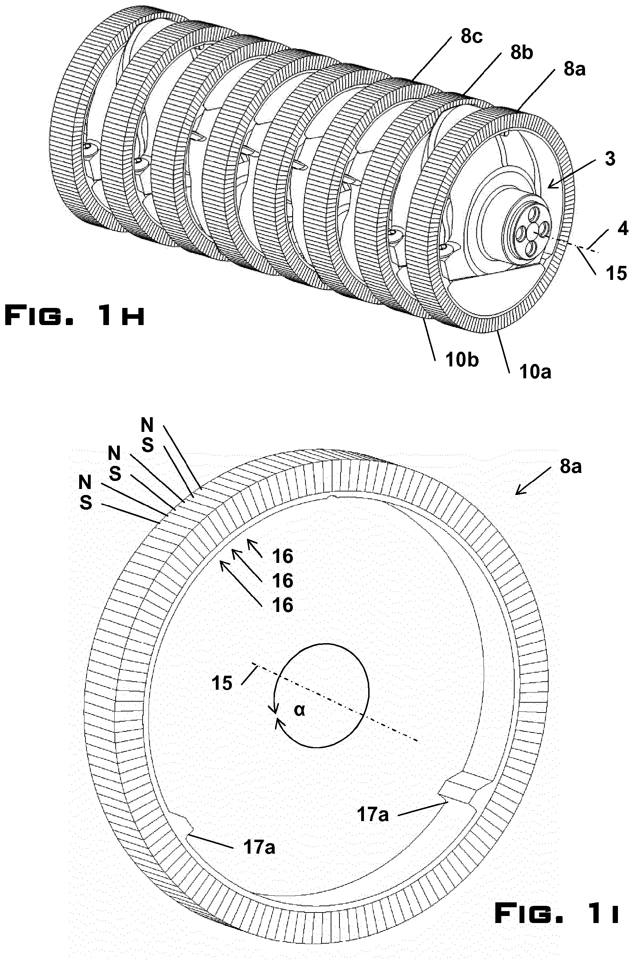

Eine erste innere Magnetfeldeinheit 8a ist auf einer in Bezug zu der Kurbelwellenachse 4 radial nach außen weisenden Seite des ersten Ausgleichsgewichts 14a angeordnet ist. Somit ist die erste innere Magnetfeldeinheit 8a an der zu dem ersten Pleuellager 6 axial benachbarten ersten Kurbelwange 9a der Kurbelwelle 3 über das erste Ausgleichsgewicht 14a indirekt angeordnet, wie in den Figuren 1b und 1h gezeigt.

Dieser Anordnung entsprechend ist eine zweite innere Magnetfeldeinheit 8b an der zu dem ersten Pleuellager 6 axial benachbarten und der ersten Kurbelwange 9a axial gegenüberliegenden zweiten Kurbelwange 9b der Kurbelwelle 3 angeordnet, indem die zweite innere Magnetfeldeinheit 8b auf der radial nach außen weisenden Seite des zweiten Ausgleichsgewichts 14b fixiert ist.

Dementsprechend sind auch an den übrigen Ausgleichsgewichten innere Magnetfeldeinheiten angeordnet, beispielsweise eine dritte Magnetfeldeinheit 8c, wie ebenfalls in den Figuren 1b und 1h gezeigt.

Die inneren Magnetfeldeinheiten 8a, 8b und 8c sind jeweils in eine sich in axiale Richtung, also parallel zur Kurbelwellenachse 4 erstreckende erste Linearführung 17a bzw. zweite Linearführung 17b bzw. dritte Linearführung 17c auf dem jeweiligen Ausgleichsgewicht 14a bzw. 14b bzw. 14c aufgeschoben und dort axial fixiert, so dass sie sich nicht verschieben können, wie in den Figuren 1b und 1h gezeigt. Die Linearführungen 17a, 17b und 17c fixieren die jeweiligen innere Magnetfeldeinheit 8a, 8b bzw. 8c bezogen auf die Kurbelwellenachse 4 in radiale Richtung, also nach außen in Zentrifugalrichtung, und Umfangsrichtung, also rotatorisch, formschlüssig durch eine Hinterschneidung. Eine Detailansicht auf die erste Linearführung 17a, welche in der ersten inneren Magnetfeldeinheit 8a und dem ersten Ausgleichsgewicht 14a ausgeformt ist, zeigen die Figuren 1f, 1g und 1i. Die zweite Linearführung 17b des zweiten Ausgleichsgewichts 14b zeigt Figur 1g.

Die ersten inneren Magnetfeldeinheiten 8a, 8b und 8c haben die Form eines die jeweilige Kurbelwange 9a, 9b bzw. 9c umschließenden geschlossenen kreisförmigen inneren Rings mit einer auf der Kurbelwellenachse 4 liegenden geometrischen ersten Achse 15. In anderen Worten haben sie die Form eines die jeweilige Kurbelwange 9a, 9b bzw. 9c umgebenden kreisbogenförmigen inneren Ringabschnitts mit einer gemeinsamen, auf der Kurbelwellenachse 4 liegenden geometrischen ersten Achse 15, wobei sich der kreisbogenförmige innere Ringabschnitt mit einem ersten Mittelpunktswinkel α von 360° erstreckt, so dass der jeweilige Kreisbogen zu einem Ring geschlossen ist, wie in Figur 1i gezeigt.

Zu besseren Stabilisierung aller ringförmigen inneren Magnetfeldeinheiten 8a, 8b und 8c sind diese mittels Stabilisierungsbolzen 47 mit dem jeweiligen Pleuellager 6 verbunden, Figur 1g.

Alle inneren Magnetfeldeinheiten, im vorliegenden Beispiel acht innere Magnetfeldeinheiten, entsprechen einander, Figur 1h.

Die inneren Magnetfeldeinheiten 8a, 8b und 8c sind permanentmagnetisch und jeweils als innere Permanentmagneteinheit 8a, 8b bzw. 8c ausgebildet. So hat die erste innere Permanentmagneteinheit 8a, bezogen auf die Kurbelwellenachse 4, eine Vielzahl an in Kreisumfangsrichtung aneinander gereihte erste Permanentmagnete 16, wobei diese ersten Permanentmagnete 16 entlang des kreisförmigen inneren Rings aneinandergrenzend angeordnet sind und in eine gemeinsame Umfangsrichtung weisende Nordpole N aufweisen, sodass die magnetische Polung der ersten Permanentmagnete 16 in Kreisumfangsrichtung zur Erzeugung eines magnetischen Wechselfeldes bei Rotation der Kurbelwelle 3 alternierend ist, wie in Figur 1i gezeigt. In anderen Worten werden die Permanentmagneteinheiten 8a, 8b bzw. 8c von Magnetringen gebildet, die entlang des Ringumfangs eine Vielzahl an sich abwechselnden magnetischen Nordpolen N und Südpolen S aufweisen, so dass in Kreisumfangsrichtung Nordpole N und Südpole S einander abwechseln.
Somit weisen die erste innere Magnetfeldeinheit 8a, die zweite innere Magnetfeldeinheit 8b und die dritte innere Magnetfeldeinheit 8c in Bezug auf die Kurbelwellenachse 4 radial nach außen. Außerdem kreisen sie bei Rotation der Kurbelwelle 3 um die Kurbelwellenachse 4 jeweils auf einer zu dem Pleuelbewegungsraum 7 axial benachbarten geometrischen Kreisbahn, nämlich die erste innere Magnetfeldeinheit 8a auf der ersten Kreisbahn 10a und die zweite innere Magnetfeldeinheit 8b auf der zweiten Kreisbahn 10b, wie in den Figuren 1b und 1h gezeigt.

In dem axialen Zwischenraum zwischen der ersten Kreisbahn 10a und der zweiten Kreisbahn 10b befindet sich der Pleuelbewegungsraum 7 des ersten Pleuels 5, wie in Figur 1b veranschaulicht. Entsprechendes gilt für die restlichen Pleuel.

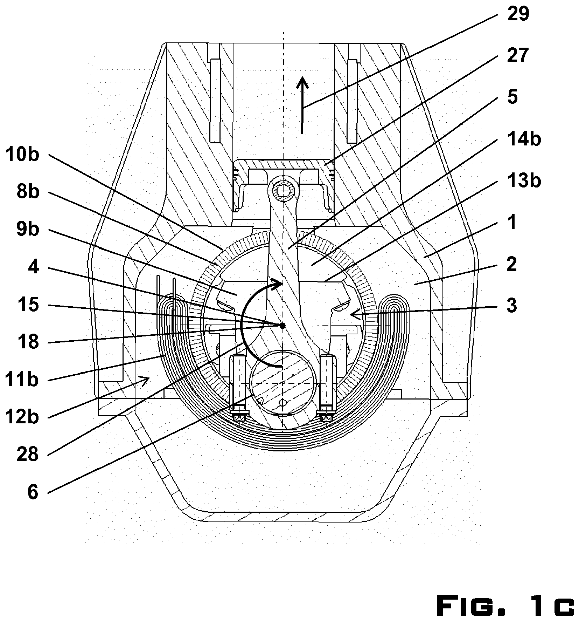

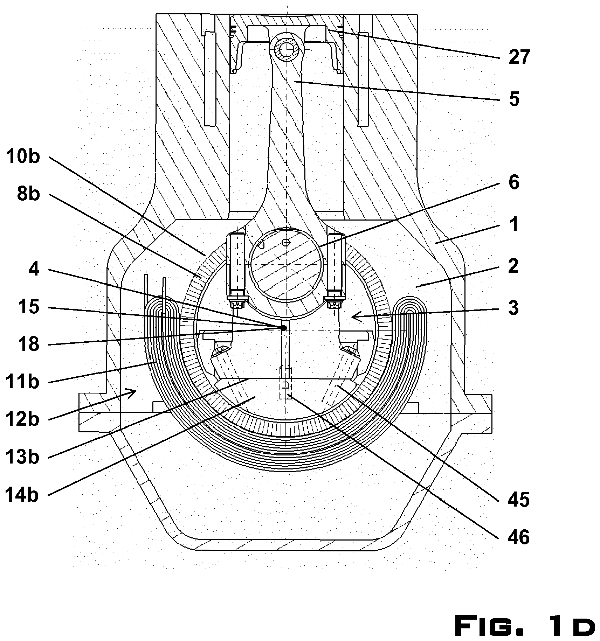

Radial beabstandet zur ersten Kreisbahn 10a der ringförmigen ersten innere Permanentmagneteinheit 8a ist eine erste äußeren Magnetfeldeinheit 11a in der Kurbelkammer 2 feststehend angeordnet. Parallel beabstandet zur ersten äußeren Magnetfeldeinheit 11a ist ebenfalls feststehend in der Kurbelkammer 2 eine zweite äußere Magnetfeldeinheit 11b vorgesehen, welche die zweite Kreisbahn 10b der ringförmigen zweiten innere Permanentmagneteinheit 8b radial beabstandet umgibt, wie in den Figuren 1a, 1b, 1c und 1d veranschaulicht. Dementsprechend ist jeder inneren Permanentmagneteinheit eine äußere Magnetfeldeinheit zugeordnet.

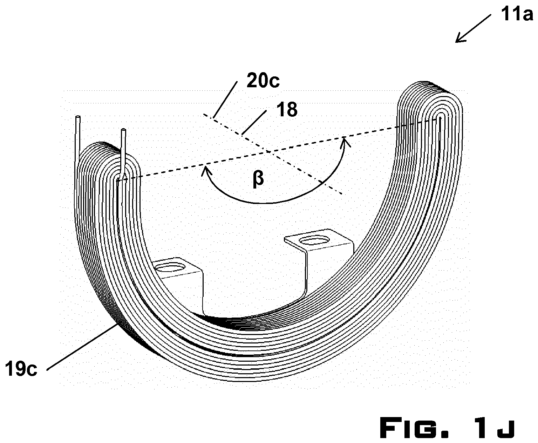

Alle äußeren Magnetfeldeinheiten 11a, 11b, 11c und 11d haben die Form eines die jeweilige Kreisbahn der jeweiligen inneren Magnetfeldeinheit 8a, 8b, 8c bzw. 8d radial beabstandet umgebenden kreisbogenförmigen äußeren Ringabschnitts mit einer auf der Kurbelwellenachse 4 liegenden geometrischen zweiten Achse 18, Figuren 1a, 1c, 1d und 1j. Dieser jeweilige kreisbogenförmige äußere Ringabschnitt hat einen zweiten Mittelpunktswinkel β von 180°, wie in Figur 1j dargestellt.

Alle äußeren Magnetfeldeinheiten 11a, 11b, 11c und 11d sind elektromagnetisch und als äußere Spuleneinheit 11a, 11b, 11c bzw. 11d ausgebildet. Diese haben jeweils eine zweite Spule 19c, deren zweite Spulenachse 20c parallel zu der Kurbelwellenachse 4 verläuft, Figur 1j.

Die erste innere Permanentmagneteinheit 8a und die erste äußere Spuleneinheit 11a sind somit derart angeordnet und ausgebildet, dass sie gemeinsam einen ersten elektromechanischen Wandler 12a bilden. Bei Rotation der Kurbelwelle 3 und somit auch der ersten inneren Permanentmagneteinheit 8a entsteht in der ersten äußeren Spuleneinheit 11a ein magnetisches Wechselfeld, wodurch eine Wechselspannung in die zweite Spule 19c induziert wird. Diese Spannung kann beispielsweise zum Aufladen eines elektrischen Energiespeichers genutzt werden. Der erste elektromechanische Wandler 12a ist in diesem Falle ein elektrischer Generator.

Umgekehrt kann durch Anlegen einer Wechselspannung an die zweite Spule 19c der ersten äußeren Spuleneinheit 11a eine magnetische Kraft auf die erste innere Permanentmagneteinheit 8a ausgeübt werden, so dass die erste innere Permanentmagneteinheit 8a und somit auch die Kurbelwelle 3 in Rotation gebracht werden kann. Der erste elektromechanische Wandler 12a bildet in diesem Falle einen Elektromotor.

Entsprechendes gilt für die zweite innere Permanentmagneteinheit 8a und die zweite äußere Spuleneinheit 11a, die dritte innere Permanentmagneteinheit 8a und die dritte äußere Spuleneinheit 11a, sowie die vierte innere Permanentmagneteinheit 8a und die vierte äußere Spuleneinheit 11a, welche jeweils einen zweiten elektromechanischen Wandler 12b, einen dritten elektromechanischen Wandler 12c bzw. einen vierten elektromechanischen Wandler 12d bilden.

Der Hubkolbenmotor hat einen elektrisch ansteuerbaren variablen Auslassventiltrieb 24 für ein erstes Auslassventil 25, das einem ersten Verbrennungsraum 26 des ersten Kolbens 27 zugeordnet ist, und für jedes weitere Auslassventil der restlichen Kolben. Der variable Auslassventiltrieb 24 ist derart ausgebildet, dass das erste Auslassventil 25 und jedes weitere Auslassventil unabhängig von der Stellung der Kurbelwelle 3 geöffnet werden können.

Der Hubkolbenmotor ist in ein in Figur 1b schematisch veranschaulichtes System eingebunden, welches einen aufladbaren und entladbaren elektrischen Energiespeicher 21, eine elektrische Steuerungseinheit 22, ein elektrisches Leistungsstellglied 30 und einen Kurbelwellensensor 23 zur Erfassung einer Winkelposition der Kurbelwelle 3 umfasst.

Die Steuerungseinheit 22 ist mit dem elektrischen Energiespeicher 21, dem ersten elektromechanischen Wandler 12a, dem zweiten elektromechanischen Wandler 12b und allen weiteren elektromechanischen Wandlern elektrisch verschaltet. Außerdem ist die Steuerungseinheit 22 derart ausgebildet, dass der Hubkolbenmotor zwischen einer Elektromotorbetriebsart und einer Generatorbetriebsart umschaltbar ist. In der Elektromotorbetriebsart wird die Kurbelwelle 3 durch Entladen des elektrischen Energiespeichers 21 elektromotorisch angetrieben. In der Generatorbetriebsart wird der elektrische Energiespeicher 21 durch mechanisches Antreiben der Kurbelwelle 3, beispielsweise durch verbrennungsmotorisches Antreiben der Kurbelwelle 3 mittels des Hubkolbenmotors oder durch externen Antrieben der Kurbelwelle 3, aufgeladen.

Die Steuerungseinheit 22 ist derart mit dem Kurbelwellensensor 23 und dem variablen Auslassventiltrieb 24 verschaltet und derart ausgebildet, dass das erste Auslassventil 25 in der Elektromotorbetriebsart in einem Positionsbereich 28 der Kurbelwelle 3, in welchem sich der erste Kolben 27 in einem Verdichtungstakt 29 befindet, geöffnet ist, dargestellt durch die Pfeile 28 und 29 in Figur 1c. Der Verdichtungstakt in derjenige Positionsbereich 28 der Kurbelwelle 3, in welchem der erste Kolben 27 eine Bewegung 29 vom unteren Totpunkt des ersten Kolbens 27, dargestellt in Figur 1c, in Richtung zum oberen Totpunkt des ersten Kolbens 27, dargestellt in Figur 1d, durchführt. Entsprechendes gilt für die weiteren Kolben und die ihnen zugeordneten Auslassventile.

Mittels dieser Maßnahme wird erreicht, dass in der Elektromotorbetriebsart kein Komprimieren bzw. Verdichten im jeweiligen Verbrennungsraum 26 erfolgen muss und das Schleppmoment des Hubkolbenmotors reduziert werden kann.

Das Leistungsstellglied 30 ist mit dem elektrischen Energiespeicher 21, dem ersten elektromechanischen Wandler 12a, dem zweiten elektromechanischen Wandler 12b, dem dritten elektromechanischen Wandler 12c, dem vierten elektromechanischen Wandler 12d und jedem weiteren elektromechanischen Wandler elektrisch verschaltet. Das Leistungsstellglied 30 ist zudem derart ausgebildet, dass in der Elektromotorbetriebsart die Kurbelwelle 3 durch Entladen des elektrischen Energiespeichers 21 elektromotorisch mit einstellbarer Leistung angetrieben werden kann und in der Generatorbetriebsart der elektrische Energiespeicher 21 durch das mechanische Antreiben der Kurbelwelle 3 mit einstellbarerer Leistung aufgeladen werden kann.

Das Leistungsstellglied 30 kann funktionaler Bestandteil der Steuerungseinheit 22 sein, und umgekehrt.

Das Leistungsstellglied 30 ist derart mit dem elektrischen Energiespeicher 21, allen elektromechanischen Wandlern und dem Kurbelwellensensor 23 elektrisch verschaltet und derart ausgebildet, dass die Leistung auf die jeweils einem Kolben zugeordneten elektromechanischen Wandlerpaare 12a und 12b, 12c und 12d, etc. mit einem unterschiedlichen Leistungsanteil verteilt werden kann, so dass den Kolben eine unterschiedliche elektrische Leistung zugeordnet werden kann. Das Verteilen der Leistung auf die Wandlerpaare 12a und 12b, 12c und 12d, etc. erfolgt in Abhängigkeit von der Position der Kurbelwelle 3. Insbesondere erfolgt das Verteilen der Leistung in Abhängigkeit von der Position der Kurbelwelle 3 derart, dass durch die Bewegung der Kurbelwelle 3, aller Pleuel und aller Kolben hervorgerufene Massenkräfte und Massenmomente höherer Ordnung, insbesondere zweiter Ordnung, reduziert oder ausgeglichen werden, wie eingangs beschrieben.

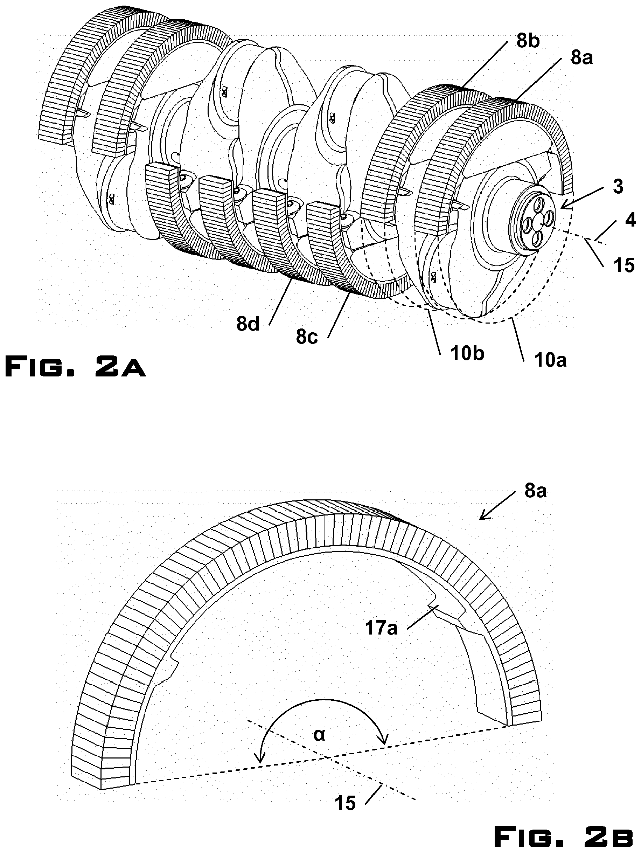

In den Figuren 2a und 2b ist eine erste alternative Form der Kurbelwelle 3 dargestellt. Alle inneren Permanentmagneteinheiten 8a, 8b, 8c und 8d weisen anstelle einer der Form eines die jeweilige Kurbelwange 9a, 9b, 9c und 9d umschließenden geschlossenen kreisförmigen inneren Rings, wie bei der ersten Form der Figuren 1a bis 1j, in dieser alternativen Form die Form eines die jeweilige Kurbelwange umgebenden kreisbogenförmigen inneren Ringabschnitts auf. Dieser offene Ringabschnitt hat eine Halbkreisform mit einer auf der Kurbelwellenachse 4 liegenden geometrischen ersten Achse 15. Somit hat der kreisbogenförmige innere Ringabschnitt einen ersten Mittelpunktswinkel α von 180°, wie in den Figuren 2a und 2b gezeigt. Die inneren Permanentmagneteinheiten 8a und 8b kreisen bei Rotation der Kurbelwelle 3 um die Kurbelwellenachse 4 auf geometrischen ersten Kreisbahnen 10a bzw. 10b, die in der Figur 2a mittels gestrichelter Linien dargestellt sind.

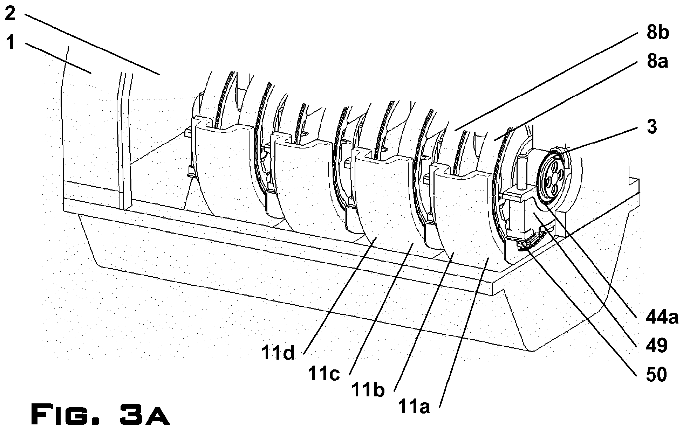

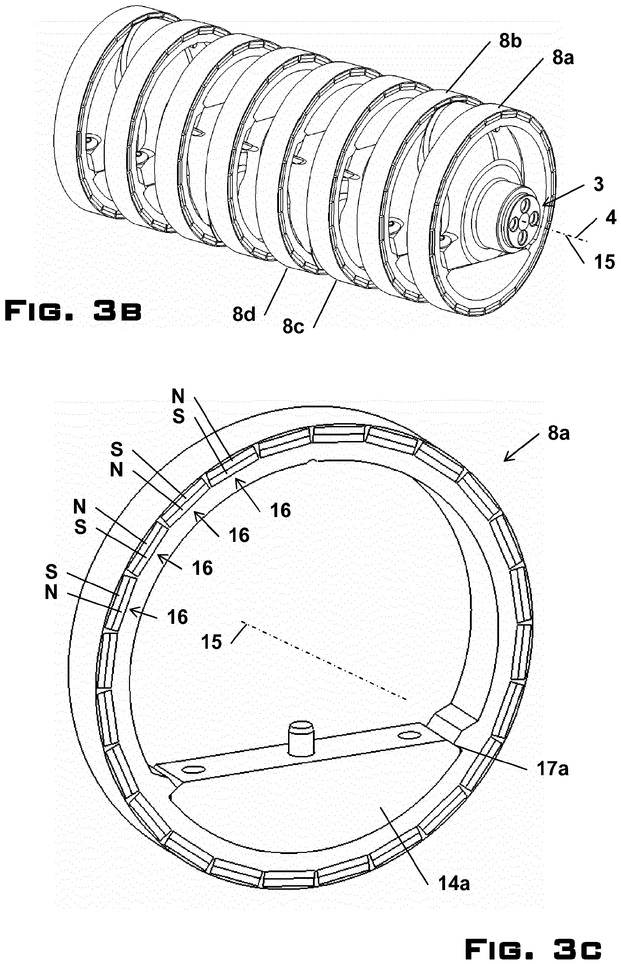

Die Figuren 3a bis 3d zeigen ein zweites Beispiel eines Hubkolbenmotors mit geschlossenen ringförmigen inneren Permanentmagneteinheiten 8a, 8b, 8c und 8d und kreisbogenförmigen äußeren Spuleneinheiten 11a, 11b, 11c und 11d.

Wie auch in dem vorangegangenen ersten Beispiel der Figuren 1a bis 1j sind die inneren Magnetfeldeinheiten permanentmagnetisch und als erste innere Permanentmagneteinheiten 8a, 8b, 8c und 8d ausgebildet. Letztere haben jeweils die Form eines die jeweilige Kurbelwange umschließenden geschlossenen kreisförmigen inneren Rings.

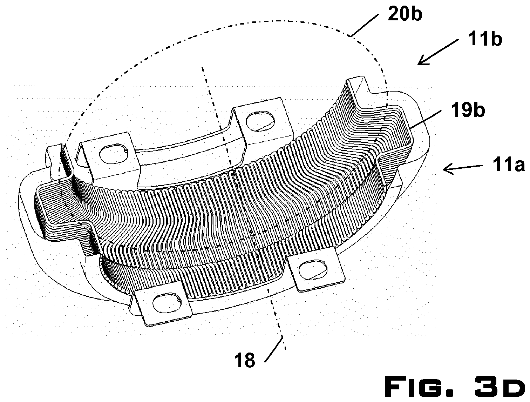

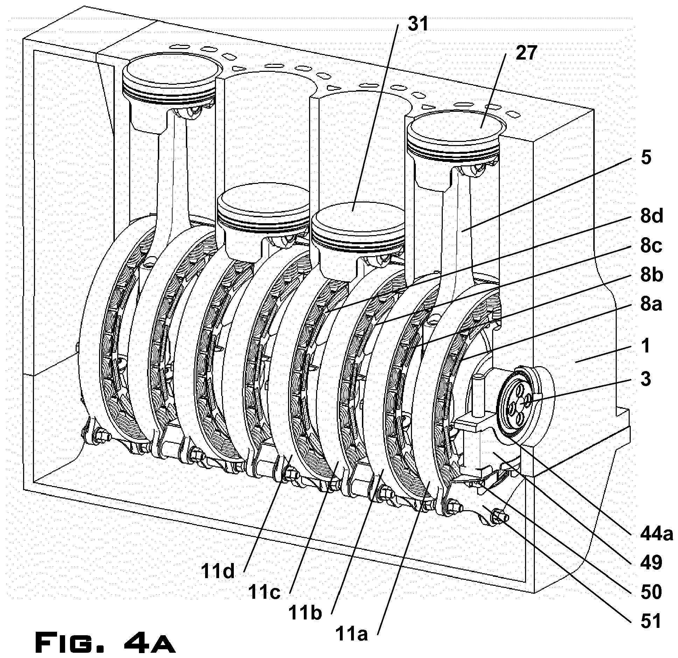

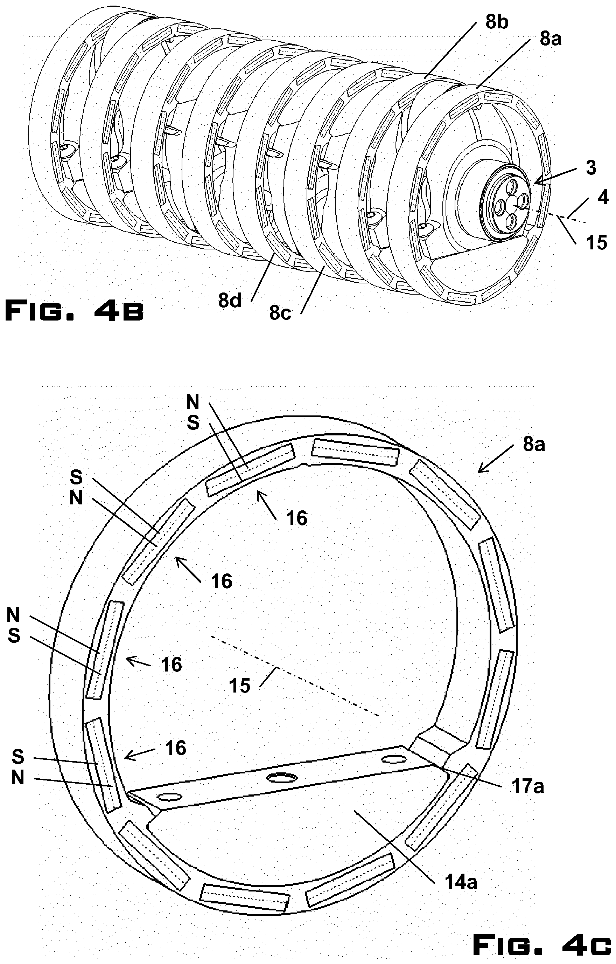

Auch in diesem Beispiel haben die innere Permanentmagneteinheiten 8a, 8b, 8c und 8d bezogen auf die Kurbelwellenachse 4 in Kreisumfangsrichtung derart aneinander gereihte erste Permanentmagnete 16, dass die magnetische Polung der ersten Permanentmagnete 16 in Kreisumfangsrichtung zur Erzeugung eines magnetischen Wechselfeldes bei Rotation der Kurbelwelle 3 alternierend sind. Jedoch unterscheidet sich die Ausrichtung der Permanentmagneten 16 gegenüber den vorangegangenen Beispielen. Bei diesem Beispiel sind die ersten Permanentmagnete 16 entlang des kreisförmigen inneren Ringabschnitts aneinandergrenzend angeordnet und haben in radiale Richtung weisende, abwechselnde magnetische Nordpole N und Südpole S, wie in Figur 3c gezeigt.
Die äußeren Magnetfeldeinheiten sind elektromagnetisch und als äußere Spuleneinheiten 11a, 11b, 11c und 11d ausgebildet. Sie haben die Form eines die jeweilige Kreisbahn 10a und 10b der inneren Permanentmagneteinheiten 8a und 8b radial beabstandet umgebenden kreisbogenförmigen äußeren Ringabschnitts mit einer auf der Kurbelwellenachse 4 liegenden geometrischen zweiten Achse 18, wobei sich der kreisbogenförmige äußere Ringabschnitt mit einem zweiten Mittelpunktswinkel β von 180° erstreckt, wie in Figur 3d gezeigt.
Die äußeren Spuleneinheiten haben eine sich in Kreisumfangsrichtung erstreckende zweite Spule 19b, deren zweite ringförmige Spulenachse 20b in Kreisumfangsrichtung verläuft, wie in Figur 3d gezeigt. Wie ebenfalls in Figur 3d veranschaulicht sind jeweils zwei äußere Spuleneinheiten 11a und 11b in einem Gehäuse zusammengefasst, wobei die jeweiligen zweiten Spulen 19b der beiden äußere Spuleneinheiten 11a und 11b von einer gemeinsamen, zusammengeführten zweiten Spule 19b gebildet werden.
Das in den Figuren 4a bis 4d dargestellte dritte Beispiel eines Hubkolbenmotors hat ebenfalls geschlossene ringförmige inneren Permanentmagneteinheiten 8a, 8b, 8c und 8d mit der geometrischen ersten Achse 15, jedoch weist es geschlossene ringförmige äußere Spuleneinheiten 11a, 11b, 11c und 11d auf.

Wie im zweiten Beispiel aus den Figuren 3a bis 3d haben die innere Permanentmagneteinheiten 8a, 8b, 8c und 8d bezogen auf die Kurbelwellenachse 4 in Kreisumfangsrichtung derart aneinander gereihte erste Permanentmagnete 16, dass die magnetische Polung der ersten Permanentmagnete 16 in Kreisumfangsrichtung zur Erzeugung eines magnetischen Wechselfeldes bei Rotation der Kurbelwelle 3 alternierend sind. Die ersten Permanentmagnete 16 sind entlang des kreisförmigen inneren Ringabschnitts aneinandergrenzend angeordnet und haben in radiale Richtung weisende, abwechselnde magnetische Nordpole N und Südpole S, wie in Figur 4c gezeigt.

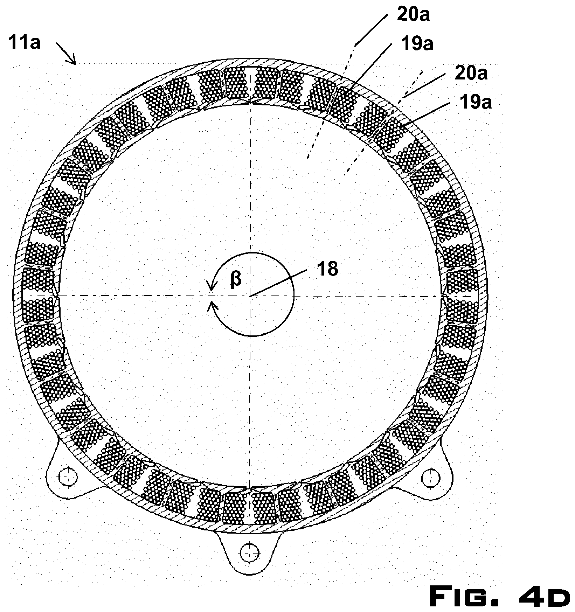

Die äußeren Spuleneinheiten 11a, 11b, 11c und 11d haben die Form eines die jeweilige Kreisbahn 10a und 10b der jeweils inneren Permanentmagneteinheit 8a, 8b, 8c und 8d radial beabstandet umgebenden kreisbogenförmigen äußeren Ringabschnitts mit einer auf der Kurbelwellenachse 4 liegenden geometrischen zweiten Achse 18, wobei sich der kreisbogenförmige äußere Ringabschnitt mit einem zweiten Mittelpunktswinkel β von 360° erstreckt, sodass die äußeren Spuleneinheiten 11a, 11b, 11c und 11d die Form eines die jeweilige Kreisbahn 10a und 10b der jeweiligen inneren Magnetfeldeinheit 8a, 8b, 8c und 8d radial beabstandet umschließenden geschlossenen kreisförmigen äußeren Rings aufweisen, wie in den Figuren 4a und 4d gezeigt.
In Figur 4d ist die erste äußere Spuleneinheiten 11a genauer dargestellt. Sie hat in Kreisumfangsrichtung aneinander gereihte zweite Spulen 19a, deren zweite Spulenachsen 20a in Bezug auf die Kurbelwellenachse 4 radial verlaufen, so dass sie sich in einem gemeinsamen Punkt treffen, der auf der mit der Kurbelwellenachse 4 zusammenfallenden zweiten Achse 18 liegt.

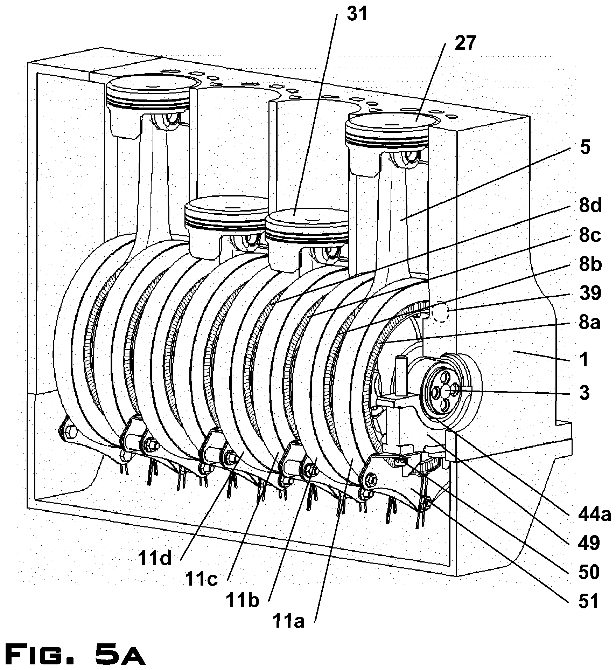

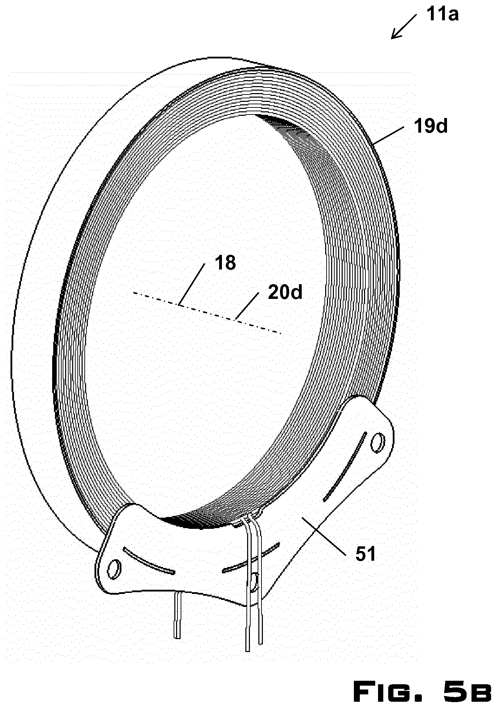

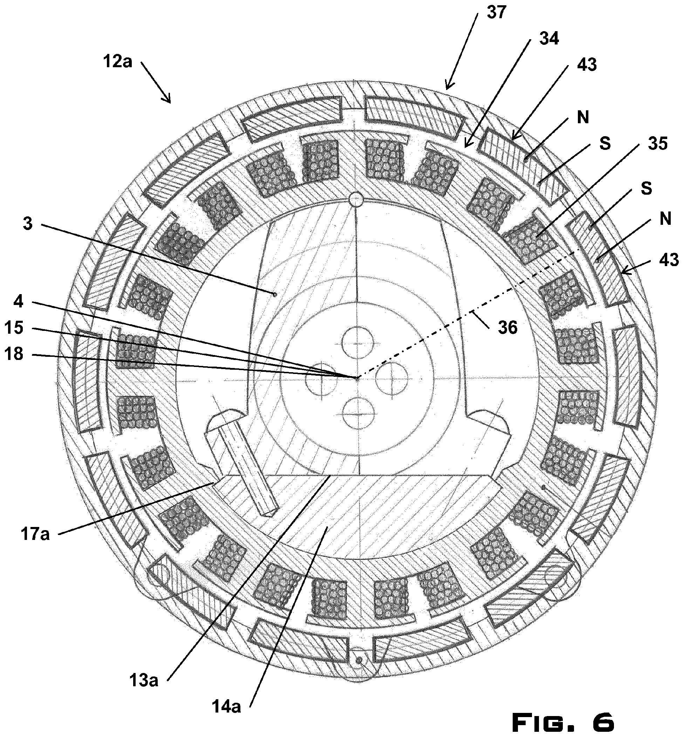

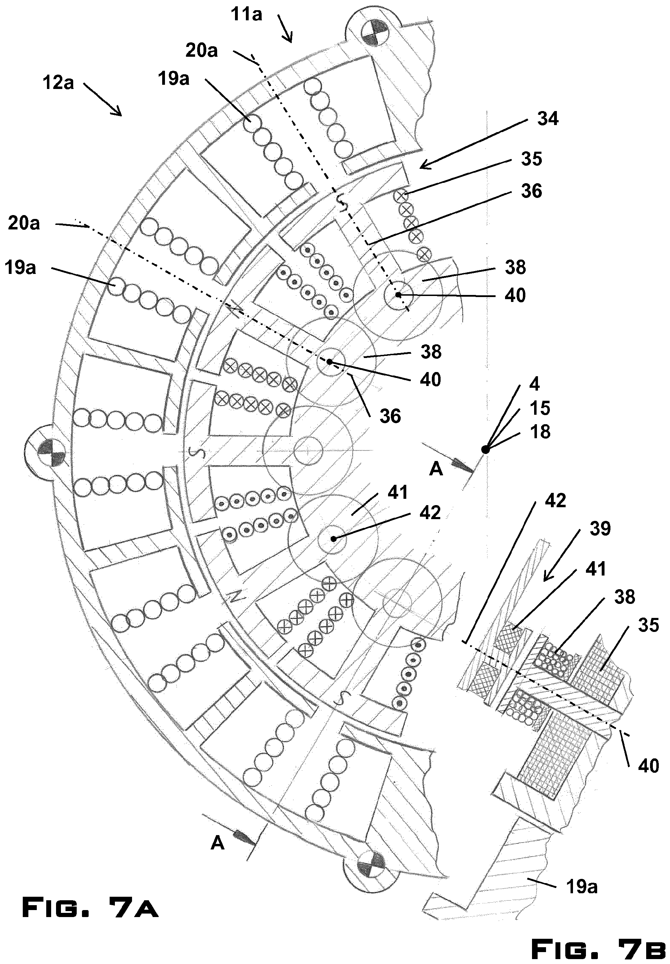

Die Figuren 5a und 5b zeigen ein viertes Beispiel eines Hubkolbenmotors mit geschlossenen ringförmigen inneren Permanentmagneteinheiten 8a, 8b, 8c und 8d, sowie geschlossenen ringförmigen äußeren Spuleneinheiten 11a, 11b, 11c und 11d. Wie in Figur 5b gezeigt hat die ringförmige erste äußere Spuleneinheit 11a des vierten Beispiels eine zweite Spule 19d mit einer parallel zu der Kurbelwellenachse 4 verlaufenden und auf der zweiten Achse 18 liegenden zweiten Spulenachse 20d. Diese zweite Spule 19d umschließt die innere Permanentmagneteinheit 8a vollständig. Die restlichen inneren Permanentmagneteinheiten und äußeren Spuleneinheiten sind wie die erste innere Permanentmagneteinheit 8a bzw. die erste äußere Spuleneinheit 11a aufgebaut.
Die ringförmige erste äußere Spuleneinheit 11a mit der zweiten Spule 19d hat eine Halterung 51, mit welcher die erste äußere Spuleneinheit 11a direkt an dem Lagerdeckel 49, welcher mittels Lagerdeckelschrauben 50 an dem Zylinderblock 1 fixiert ist, gehalten wird, wie in den Figuren 5a und 5b gezeigt.
In den vorangehend dargestellten Ausführungsbeispielen werden die innere Magnetfeldeinheit stets von einer inneren Permanentmagneteinheit und die äußere Magnetfeldeinheit stets von einer äußeren Spuleneinheit gebildet. Es ist jedoch auch möglich, dass die innere Magnetfeldeinheit eine innere Spuleneinheit und die äußere Magnetfeldeinheit eine äußere Permanentmagneteinheit, wie in Figur 6 dargestellt, oder eine äußere Spuleneinheit, entsprechend Figur 7, ist.

In Figur 6 ist eine zweite alternative Form dargestellt, bei der die erste innere Magnetfeldeinheit, welche die Form eines geschlossenen kreisförmigen inneren Rings mit einer auf der Kurbelwellenachse 4 liegenden ersten Achse 15 aufweist, elektromagnetisch und als erste innere Spuleneinheit 34 ausgebildet ist. Die erste innere Spuleneinheit 34 hat, bezogen auf die Kurbelwellenachse 4, in Kreisumfangsrichtung aneinander gereihte erste Spulen 35, deren erste Spulenachsen 36 in Bezug auf die Kurbelwellenachse 4 radial verlaufen.
Die erste äußere Magnetfeldeinheit hat die Form eines geschlossenen kreisförmigen äußeren Rings mit einer auf der Kurbelwellenachse 4 liegenden zweiten Achse 18, ist permanentmagnetisch und als erste äußere Permanentmagneteinheit 37 ausgebildet. Die erste äußere Permanentmagneteinheit 37 hat, bezogen auf die Kurbelwellenachse 4, in Kreisumfangsrichtung derart aneinander gereihte zweite Permanentmagnete 43, dass die magnetische Polung der zweiten Permanentmagnete 43 in Kreisumfangsrichtung zur Erzeugung eines magnetischen Wechselfeldes bei Rotation der Kurbelwelle 3 alternierend ist. Hierzu sind die zweiten Permanentmagnete 43 entlang des kreisbogenförmigen inneren Ringabschnitts aneinandergrenzend angeordnet und haben in radiale Richtung weisenden Nordpole N und Südpole S, die eine abwechselnde Polungsausrichtung aufweisen.
Die Figuren 7a und 7b zeigen eine dritte alternative Form der inneren und äußeren Magnetfeldeinheit. Während bisher entweder die innere oder die äußere Magnetfeldeinheit von einer Permanentmagneteinheit gebildet worden ist, sieht die dritte alternative Form vor, dass beide Einheiten Spuleneinheiten sind. Hierdurch kann auf den Einsatz von Permanentmagneten gänzlich verzichtet werden.

Wie auch bei der Form von Figur 6 hat die erste innere Magnetfeldeinheit die Form eines geschlossenen kreisförmigen inneren Rings mit einer auf der Kurbelwellenachse 4 liegenden ersten Achse 15. Außerdem ist die erste innere Magnetfeldeinheit elektromagnetisch und als erste innere Spuleneinheit 34 ausgebildet. Die erste innere Spuleneinheit 34 hat, bezogen auf die Kurbelwellenachse 4, in Kreisumfangsrichtung aneinander gereihte erste Spulen 35, deren erste Spulenachsen 36 in Bezug auf die Kurbelwellenachse 4 radial verlaufen und auf der ersten Achse 15 zusammentreffen.

Die ersten Spulen 35 sind derart angeordnet und verschaltet, dass die magnetische Polung, also die Nordpole N und Südpole S, der ersten Spulen 35 in Kreisumfangsrichtung zur Erzeugung eines magnetischen Wechselfeldes bei Rotation der Kurbelwelle 3 alternierend ist.

Die erste äußere Spuleneinheit 11a hat die Form eines die erste innere Spuleneinheit 34 radial beabstandet umgebenden kreisförmigen äußeren Rings mit einer auf der Kurbelwellenachse 4 liegenden geometrischen zweiten Achse 18.

Die erste äußere Spuleneinheit 11a hat in Kreisumfangsrichtung aneinander gereihte zweite Spulen 19a, deren zweite Spulenachsen 20a in Bezug auf die Kurbelwellenachse 4 radial verlaufen, so dass sie sich in einem gemeinsamen Punkt treffen, der auf der mit der Kurbelwellenachse 4 zusammenfallenden zweiten Achse 18 liegt.

Um die erste innere Spuleneinheit 34 mit Spannung zu versorgen, sodass die ersten Spulen 35 in Kreisumfangsrichtung ein magnetisches Wechselfeld bei Rotation der Kurbelwelle 3 erzeugen, weist die erste innere Spuleneinheit 34 elektrisch mit den ersten Spulen 35 verbundene Zusatzspulen 38 auf. Jeder ersten Spule 35 ist hierbei eine Zusatzspule 38 zugeordnet. Die in Kreisumfangsrichtung aneinander gereihten Zusatzspulen 38 haben parallel zu der Kurbelwellenachse 4 verlaufenden Zusatzspulenachsen 40, wie in den Figuren 7a und 7b gezeigt.

Axial benachbart zur ersten Kreisbahn 10a der ersten inneren Spuleneinheit 34 sind elektromagnetische seitliche Magnetfeldeinheiten 39 in der Kurbelkammer 2 feststehend angeordnet, wobei jeder Zusatzspule 38 eine elektromagnetische seitliche Magnetfeldeinheiten 39 zugeordnet ist. Die Anordnung in der Kurbelkammer 2 ist schematisch in der Figur 5a anhand des Bezugszeichens 39 veranschaulicht. Die in Kreisumfangsrichtung aneinander gereihten seitlichen Spulen 41 haben parallel zu der Kurbelwellenachse 4 verlaufende Seitenspulenachsen 42. Die Zusatzspulen 38 und die seitlichen Magnetfeldeinheiten 39 befinden sich, bezogen auf die Kurbelwellenachse 4, in derart axialer Gegenüberlage zueinander und sind derart ausgebildet, dass sie bei Rotation der Kurbelwelle 3 um die Kurbelwellenachse 4 gemeinsam einen elektrischen Generator zur elektrischen Spannungsversorgung der ersten Spulen 35 bilden. Somit bildet die erste innere Spuleneinheit 34 bei Rotation ein Magnetfeld zur Erzeugung einer induzierten Spannung in der ersten äußeren Spuleneinheit 11a.

## Patentansprüche

1. System aus
• einem als 4-Takt-Motor zum Antreiben eines Fahrzeugs ausgebildeten Hubkolbenmotor, der eine Kurbelwelle (3) aufweist, die mit einem ersten elektromechanischen Wandler (12a) mechanisch gekoppelt ist, wobei die Kurbelwelle (3) von dem ersten elektromechanischen Wandler (12a) in einer Elektromotorbetriebsart antreibbar ist,
• einem aufladbaren und entladbaren elektrischen Energiespeicher (21),
• einer elektrischen Steuerungseinheit (22) und
• einem Kurbelwellensensor (23) zur Erfassung einer Position der Kurbelwelle (3),
wobei
• die Steuerungseinheit (22) derart mit dem elektrischen Energiespeicher (21) und dem ersten elektromechanischen Wandler (12a) elektrisch verschaltet und derart ausgebildet ist, dass der Hubkolbenmotor zwischen
- der Elektromotorbetriebsart, in welcher die Kurbelwelle (3) durch Entladen des elektrischen Energiespeichers (21) elektromotorisch antreibbar ist und der elektromechanische Wandler (12a) als Elektromotor wirkt, und
- einer Generatorbetriebsart, in welcher der elektrischen Energiespeicher (21) durch mechanisches Antreiben der Kurbelwelle (3), nämlich durch verbrennungsmotorisches Antreiben der Kurbelwelle (3) mittels des Hubkolbenmotors und externes Antreiben der Kurbelwelle mittels Fahrzeugräder beim Verzögern des Fahrzeugs, aufladbar ist,
umschaltbar ist,
**dadurch gekennzeichnet, dass**
• der Hubkolbenmotor einen derart ausgebildeten elektrisch ansteuerbaren variablen Auslassventiltrieb (24) für mindestens ein erstes Auslassventil (25), das einem ersten Verbrennungsraum (26) eines mit mindestens einem ersten Pleuel (5) gekoppelten ersten Kolben (27) zugeordnet ist, aufweist, dass das mindestens eine erste Auslassventil (25) unabhängig von der Stellung der Kurbelwelle (3) öffenbar ist,
• der Hubkolbenmotor einen derart ausgebildeten elektrisch ansteuerbaren variablen Einlassventiltrieb für mindestens ein erstes Einlassventil, das dem ersten Verbrennungsraum (26) zugeordnet ist, aufweist, dass das mindestens eine erste Einlassventil unabhängig von der Stellung der Kurbelwelle (3) öffenbar ist,
• die Steuerungseinheit (22) derart ausgebildet ist, dass ein regelmäßiges Umschalten zwischen der Elektromotorbetriebsart und der Generatorbetriebsart nach einer bestimmten Anzahl an Umdrehungen der Kurbelwelle (3) erfolgt, und
• die Steuerungseinheit (22) derart mit dem Kurbelwellensensor (23), dem variablen Einlassventiltrieb und dem variablen Auslassventiltrieb (24) verschaltet und derart ausgebildet ist, dass in der Elektromotorbetriebsart der Einlassventiltrieb und der Auslassventiltrieb (24) in einem 2-Takt-Betrieb des Hubkolbenmotors laufen, wobei
- das mindestens eine erste Einlassventil in einem Positionsbereich der Kurbelwelle (3), in welchem sich der erste Kolben (27) von dem mindestens einen ersten Einlassventil weg bewegt, geöffnet ist und
- das mindestens eine erste Auslassventil (25) in einem Positionsbereich (28) der Kurbelwelle (3), in welchem sich der erste Kolben (27) auf das Auslassventil (25) zu bewegt, geöffnet ist.

2. System nach Anspruch 1,
**dadurch gekennzeichnet, dass**
der Hubkolbenmotor
• einen Zylinderblock (1),
• die Kurbelkammer (2), die zumindest teilweise in dem Zylinderblock (1) ausgeformt ist,
• die Kurbelwelle (3), die innerhalb der Kurbelkammer (2) um eine geometrische Kurbelwellenachse (4) rotierbar angeordnet ist,
• den mindestens einen ersten Pleuel (5), der drehbar in einem ersten Pleuellager (6) der Kurbelwelle (3) gelagert ist und bei Rotation der Kurbelwelle (3) eine Pleuelbewegung in einem geometrischen Pleuelbewegungsraum (7) durchführt,
• eine erste innere Magnetfeldeinheit (8a; 34), die an einer zu dem ersten Pleuellager (6) bezogen auf die Kurbelwellenachse (4) axial benachbarten ersten Kurbelwange (9a) der Kurbelwelle (3) derart angeordnet ist, dass die erste innere Magnetfeldeinheit (8a; 34) in Bezug auf die Kurbelwellenachse (4) radial nach außen weist und bei Rotation der Kurbelwelle (3) um die Kurbelwellenachse (4) auf einer zu dem Pleuelbewegungsraum (7) axial benachbarten geometrischen ersten Kreisbahn (10a) kreist, und
• eine erste äußere Magnetfeldeinheit (11a; 37), die in der Kurbelkammer (2) radial beabstandet zur ersten Kreisbahn (10a) feststehend angeordnet ist, aufweist,
wobei die erste innere Magnetfeldeinheit (8a; 34) und die erste äußere Magnetfeldeinheit (11a; 37) derart angeordnet und ausgebildet sind, dass sie gemeinsam den ersten elektromechanischen Wandler (12a), insbesondere einen Elektromotor oder einen elektrischen Generator, bilden,
wobei
• die erste Kurbelwange (9a) auf einer in Bezug zu der Kurbelwellenachse (4) radial nach außen weisenden und dem ersten Pleuellager (6) gegenüberliegenden Seite ein erstes Ausgleichsgewicht (14a) aufweist,
• das erste Ausgleichsgewicht (14a) aus einem nichtmagnetisierbaren Werkstoff besteht und
• die erste innere Magnetfeldeinheit (8a; 34) auf einer in Bezug zu der Kurbelwellenachse (4) radial nach außen weisenden Seite des ersten Ausgleichsgewichts (14a) angeordnet ist.

3. System nach Anspruch 1 oder 2, mit
• einem elektrischen Leistungsstellglied (30), das insbesondere von der elektrischen Steuerungseinheit (22) gebildet wird,
wobei
• der Hubkolbenmotor
- den ersten Kolben (27), dem der auf der einen Seite des ersten Pleuellagers (6) angeordneter erster elektromechanischer Wandler (12a) zugeordnet ist und der mit dem mindestens einem ersten Pleuel (5), der drehbar in dem ersten Pleuellager (6) der Kurbelwelle (3) gelagert ist, gekoppelt ist, und
- einen zweiten Kolben (31), dem ein auf der einen Seite eines zweiten Pleuellagers (33) angeordneter dritter elektromechanischer Wandler (12c) zugeordnet ist und der mit mindestens einem zweiten Pleuel (32), der drehbar in dem zweiten Pleuellager (33) der Kurbelwelle (3) gelagert ist, gekoppelt ist,
aufweist,
• der erste elektromechanische Wandler (12a) und der dritte elektromechanische Wandler (12c) derart ausgebildet sind, dass das jeweilige Magnetfeld eine seitliche Kraft auf die Kurbelwelle (3) bei den jeweiligen Pleuellagern (6, 33) ausübt,
• das Leistungsstellglied (30) derart mit dem elektrischen Energiespeicher (21), dem ersten elektromechanischen Wandler (12a) und dem dritten elektromechanischen Wandler (12c) elektrisch verschaltet und derart ausgebildet ist, dass der Hubkolbenmotor in der Elektromotorbetriebsart und/oder der Generatorbetriebsart betreibbar ist,
• in der Elektromotorbetriebsart die Kurbelwelle (3) durch Entladen des elektrischen Energiespeichers (21) elektromotorisch mit einstellbarer Leistung antreibbar ist und
• in der Generatorbetriebsart der elektrische Energiespeicher (21) durch das mechanische Antreiben der Kurbelwelle (3) mit einstellbarerer Leistung aufladbar ist,
**dadurch gekennzeichnet, dass**
das Leistungsstellglied (30) derart mit dem elektrischen Energiespeicher (21), dem ersten elektromechanischen Wandler (12a), dem dritten elektromechanischen Wandler (12c) und dem Kurbelwellensensor (23) elektrisch verschaltet und derart ausgebildet, dass
• die Leistung auf den ersten elektromechanischen Wandler (12a) mit einem ersten Leistungsanteil und den dritten elektromechanischen Wandler (12c) mit einem zweiten Leistungsanteil verteilt ist und
• das Verteilen der Leistung auf den ersten elektromechanischen Wandler (12a) und den dritten elektromechanischen Wandler (12c) in Abhängigkeit von der Position der Kurbelwelle (3) erfolgt,
wobei das Verteilen der Leistung in Abhängigkeit von der Position der Kurbelwelle (3) derart erfolgt, dass durch die Bewegung der Kurbelwelle (3), des mindestens einen ersten Pleuels (5), des mindestens einen zweiten Pleuels (32), des ersten Kolbens (27) und/oder des zweiten Kolbens (31) hervorgerufene Massenkräfte und -momente höherer Ordnung, insbesondere zweiter Ordnung, durch das Aufbringen der seitlichen Kraft in Richtung senkrecht zur Kurbelwellenachse (4) reduziert oder ausgeglichen sind.

4. System nach Anspruch 3,
**dadurch gekennzeichnet, dass**
die Massenkräfte und -momente höherer Ordnung Taumelmomente in senkrechter Richtung zur Kurbelwellenachse (4) sind.

5. System nach Anspruch 3 oder 4,
**dadurch gekennzeichnet, dass**
innere Magnetfeldeinheiten (8a; 34; 8b) und/oder äußere Magnetfeldeinheiten (11a, 11b) der elektromechanischen Wandel (12a, 12b, 12c, 12d) die Kurbelwelle (3) unvollständig umschließen und insbesondere nur einseitig umgeben, insbesondere mit einer Umschließung von unter 360° oder 270°.

6. System nach Anspruch 5,
**dadurch gekennzeichnet, dass**
die inneren Magnetfeldeinheiten (8a; 34; 8b) jeweils die Form eines die jeweiligen Kurbelwangen (9a, 9b) umgebenden kreisbogenförmigen inneren Ringabschnitts aufweisen und sich der jeweilige kreisbogenförmige innere Ringabschnitt mit einem ersten Mittelpunktswinkel (α) von unter 360° oder 270° erstreckt.

7. System nach Anspruch 5 oder 6,
**dadurch gekennzeichnet, dass**
die äußeren Magnetfeldeinheiten (11a, 11b) jeweils die Form eines die Kreisbahn der jeweiligen inneren Magnetfeldeinheit (8a; 34) radial beabstandet umgebenden kreisbogenförmigen äußeren Ringabschnitts aufweisen und sich der jeweilige kreisbogenförmige äußere Ringabschnitt mit einem zweiten Mittelpunktswinkel (β) von unter 360° oder 270° erstreckt.

8. System nach einem der Ansprüche 3 bis 7,
**dadurch gekennzeichnet, dass**
das Leistungsstellglied (30) derart ausgebildet und verschaltet ist, dass der Hubkolbenmotor entweder in der Elektromotorbetriebsart oder in der Generatorbetriebsart umschaltbar betreibbar ist.

9. System nach einem der Ansprüche 3 bis 8,
**dadurch gekennzeichnet, dass**
• dem ersten Kolben (27) ein auf der anderen Seite des ersten Pleuellagers (6) angeordneter zweiter elektromechanischer Wandler (12b) zugeordnet ist,
• dem zweiten Kolben (31) ein auf der anderen Seite des zweiten Pleuellagers (33) angeordneter vierter elektromechanischer Wandler (12d) zugeordnet ist und
• das Leistungsstellglied (30) mit dem zweiten elektromechanischen Wandler (12b) und dem vierten elektromechanischen Wandler (12d) elektrisch verschaltet ist.

10. System nach Anspruch 9,
**dadurch gekennzeichnet, dass**
• der dritte elektromechanische Wandler (12c) dem ersten elektromechanischen Wandler (12a) entspricht und
• der vierte elektromechanische Wandler (12d) dem zweiten elektromechanischen Wandler (12b) entspricht.

11. System nach einem der Ansprüche 3 bis 10,
**dadurch gekennzeichnet, dass**
• das System einen mit dem Hubkolbenmotor gekoppelten und mit dem Leistungsstellglied verschalteten Vibrationssensor zur Erfassung von Vibrationen am Hubkolbenmotor, die durch unausgeglichene Massenkräfte und -momente höherer Ordnung, insbesondere zweiter Ordnung, die durch die Bewegung der Kurbelwelle (3), des mindestens einen ersten Pleuels (5), des mindestens einen zweiten Pleuels (32), des ersten Kolbens (27) und/oder des zweiten Kolbens (31) hervorgerufene sind, erzeugt sind, und
• das Leistungsstellglied (30) derart verschaltet und ausgebildet ist, dass das Verteilen der Leistung zum Reduzieren oder Ausgleichen der hervorgerufene Massenkräfte und -momente höherer Ordnung, insbesondere zweiter Ordnung, in Abhängigkeit von den mittels des Vibrationssensors erfassten Vibrationen erfolgt.

## Claims

1. System, including
• a reciprocating piston engine configured as a 4-stroke engine for driving a vehicle, which engine comprises a crankshaft (3) mechanically coupled to a first electromechanical transducer (12a), wherein the crankshaft (3) is drivable by the first electromechanical transducer (12a) in an electric motor operating mode,
• a chargeable and dischargeable electrical energy storage device (21),
• an electrical control unit (22) and
• a crankshaft sensor (23) for detecting a position of the crankshaft (3), wherein
• the control unit (22) is designed and electrically connected to the electrical energy storage device (21) and the first electromechanical transducer (12a) in such a way that the reciprocating piston engine is switchable between
- the electric motor operating mode in which the crankshaft (3) can be electromotively driven by discharging the electric energy storage device (21) and the electromechanical transducer (12a) acts as an electric motor, and
- a generator operating mode in which the electrical energy storage device (21) can be charged by mechanically driving the crankshaft (3), namely by combustion-motive driving the crankshaft (3) by means of the reciprocating piston engine and externally driving the crankshaft by means of vehicle wheels when the vehicle decelerates,
**characterized in that**
• the reciprocating piston engine has an electrically controllable variable exhaust valve train (24) for at least one first exhaust valve (25), which is assigned to a first combustion chamber (26) of a first piston (27) coupled to at least one first connecting rod (5), which exhaust valve train (24) is designed in such a way that the at least one first exhaust valve (25) can be opened independently of the position of the crankshaft (3),
• the reciprocating piston engine has an electrically controllable variable intake valve train for at least one first intake valve, which is assigned to the first combustion chamber (26), which intake valve train is designed in such a way that the at least one first intake valve can be opened independently of the position of the crankshaft (3),
• the control unit (22) is designed such that a regular switching between the electric motor operating mode and the generator operating mode takes place after a certain number of revolutions of the crankshaft (3), and
• the control unit (22) is designed and connected to the crankshaft sensor (23), the variable intake valve train and the variable exhaust valve train (24) in such a way that in the electric motor operating mode the intake valve train and the exhaust valve train (24) run in a 2-stroke operation of the reciprocating piston engine, wherein
- the at least one first intake valve is opened in a positional region of the crankshaft (3) in which the first piston (27) moves away from the at least one first intake valve, and
- the at least one first exhaust valve (25) is opened in a positional region (28) of the crankshaft (3) in which the first piston (27) moves towards the exhaust valve (25).

2. System according to claim 1,
**characterized in that**
the piston engine includes
• a cylinder block (1),
• the crank chamber (2), which is at least partially formed in the cylinder block (1),
• the crankshaft (3), which is arranged inside the crank chamber (2) so as to be rotatable about a geometric crankshaft axis (4),
• the at least one first connecting rod (5), which is rotatably mounted in a first connecting rod bearing (6) of the crankshaft (3) and performs a connecting rod movement in a geometric connecting rod movement space (7) upon rotation of the crankshaft (3),
• a first inner magnetic field unit (8a; 34), which is arranged on a first crank web (9a) of the crankshaft (3) axially adjacent to the first connecting rod bearing (6) with respect to the crankshaft axis (4) in such a way that the first inner magnetic field unit (8a; 34) faces radially outwards with respect to the crankshaft axis (4) and, upon rotation of the crankshaft (3) about the crankshaft axis (4), circulates on a geometric circular path (10a) which is axially adjacent to the connecting rod movement space (7), and
• a first outer magnetic field unit (11a; 37) which is arranged in a fixedly disposed manner in the crank chamber (2) radially spaced from the first circular path (10a),
wherein the first inner magnetic field unit (8a; 34) and the first outer magnetic field unit (11a; 37) are arranged and designed in such a way that together they form the first electromechanical transducer (12a), in particular an electric motor or an electric generator, wherein
• the first crank web (9a) has a first balancing weight (14a) on a side facing radially outwards in relation to the crankshaft axis (4) and opposite the first connecting rod bearing (6),
• the first balancing weight (14a) is made of a non-magnetizable material, and
• the first inner magnetic field unit (8a; 34) is arranged on a side of the first balancing weight (14a) facing radially outward with respect to the crankshaft axis (4).

3. System according to claim 1 or 2, having
• an electrical power actuator (30), which is formed in particular by the electrical control unit (22),
wherein
• the piston engine comprises
- the first piston (27) with which the first electromechanical transducer (12a) which is arranged on the one side of the first connecting rod bearing (6) is associated and which is coupled to the at least one first connecting rod (5) rotatably mounted in the first connecting rod bearing (6) of the crankshaft (3), and
- a second piston (31) with which a third electromechanical transducer (12c) which is arranged on the one side of a second connecting rod bearing (33) is associated and which is coupled to the at least one second connecting rod (32) rotatably mounted in the second connecting rod bearing (33) of the crankshaft (3),
• the first electromechanical transducer (12a) and the third electromechanical transducer (12c) are formed such that the respective magnetic field exerts a lateral force on the crankshaft (3) at the respective connecting rod bearings (6, 33),
• the electrical power actuator (30) is electrically connected to the electrical energy storage device (21), the first electromechanical transducer (12a) and the third electromechanical transducer (12c) and designed in such a way that the reciprocating piston engine can be operated in the electric motor operating mode and/or the generator operating mode,
• in the electric motor operating mode, the crankshaft (3) can be driven electromotively with adjustable power by discharging the electric energy storage device (21), and
• in the generator operating mode, the electrical energy storage device (21) can be charged by mechanically driving the crankshaft (3) with adjustable power,
**characterized in that**
the electrical power actuator (30) is electrically connected to the electrical energy storage device (21), the first electromechanical transducer (12a), the third electromechanical transducer (12c) and the crankshaft sensor (23) and designed in such a way that
• the power is distributed to the first electromechanical transducer (12a) with a first power component and the third electromechanical transducer (12c) with a second power component, and
• the distribution of the power to the first electromechanical transducer (12a) and the third electromechanical transducer (12c) takes place as a function of the position of the crankshaft (3),
wherein the distribution of the power takes place as a function of the position of the crankshaft (3) in such a way that inertia forces and moments of higher order, in particular of second order, caused by the movement of the crankshaft (3), the at least one first connecting rod (5), the at least one second connecting rod (32), the first piston (27) and/or the second piston (31) are reduced or compensated by the application of the lateral force in a direction perpendicular to the crankshaft axis (4).

4. System according to claim 3,
**characterized in that**
the inertia forces and moments of higher order are wobble moments in a direction perpendicular to the crankshaft axis (4).

5. System according to claim 3 or 4,
**characterized in that**
inner magnetic field units (8a; 34; 8b) and/or outer magnetic field units (11a, 11b) of the electromechanical transducers (12a, 12b, 12c, 12d) incompletely surround the crankshaft (3) and in particular surround it only on one side, in particular with a surrounding of less than 360° or 270°.

6. System according to claim 5,
**characterized in that**
the inner magnetic field units (8a; 34; 8b) each have the shape of a circular-arc-shaped inner ring portion surrounding the respective crank webs (9a, 9b), and the respective circular-arc-shaped inner ring portion extends with a first center angle (α) of less than 360° or 270°.

7. System according to claim 5 or 6, **characterized in that** the outer magnetic field units (11a, 11b) each have the shape of a circular-arc-shaped outer ring portion surrounding the circular path of the respective inner magnetic field unit (8a; 34) in a radially spaced-apart manner, and the respective circular-arc-shaped outer ring portion extends with a second center angle (β) of less than 360° or 270°.

8. System according to one of claims 3 to 7, **characterized in that** the electrical power actuator (30) is designed and connected in such a way that the reciprocating piston engine can be operated switchably either in the electric motor operating mode or in the generator operating mode.

9. System according to one of claims 3 to 8, **characterized in that**
• the first piston (27) is associated with a second electromechanical transducer (12b) arranged on the other side of the first connecting rod bearing (6),
• the second piston (31) is associated with a fourth electromechanical transducer (12d) arranged on the other side of the second connecting rod bearing (33), and
• the electrical power actuator (30) is electrically connected to the second electromechanical transducer (12b) and the fourth electromechanical transducer (12d).

10. System according to claim 9, **characterized in that**
• the third electromechanical transducer (12c) corresponds to the first electromechanical transducer (12a), and
• the fourth electromechanical transducer (12d) corresponds to the second electromechanical transducer (12b).

11. System according to one of claims 3 to 10, **characterized in that**
• the system comprises a vibration sensor coupled to the reciprocating piston engine and connected to the electrical power actuator for detecting vibrations on the reciprocating piston engine caused by unbalanced inertia forces and moments of higher order, in particular of second order, caused by the movement of the crankshaft (3), the at least one first connecting rod (5), the at least one second connecting rod (32), the first piston (27) and/or the second piston (31), and
• the electrical power actuator (30) is connected and designed in such a way that the distribution of the power for reducing or compensating for the higher-order, in particular second-order, inertia forces and moments caused is carried out as a function of the vibrations detected by means of the vibration sensor.

## Revendications

1. Système composé
• d'un moteur à pistons alternatifs conçu comme un moteur quatre-temps pour la propulsion d'un véhicule, qui comporte un vilebrequin (3) couplé mécaniquement à un premier convertisseur électromécanique (12a), lequel vilebrequin (3) peut être entraîné par le premier convertisseur électromécanique (12a) dans un mode de fonctionnement comme moteur électrique,
• d'un accumulateur d'énergie électrique (21) rechargeable et déchargeable,
• d'une unité de commande électrique (22) et
• d'un détecteur de vilebrequin (23) destiné à détecter une position du vilebrequin (3),
dans lequel
• l'unité de commande (22) est montée en circuit électrique avec l'accumulateur d'énergie électrique (21) et le premier convertisseur électromécanique (12a) et conformée de telle manière que le moteur à pistons alternatifs peut être commuté entre
- le mode de fonctionnement comme moteur électrique, dans lequel le vilebrequin (3) peut être entraîné par la décharge de l'accumulateur d'énergie électrique (21) et le convertisseur électromécanique (12a) fait office de moteur électrique, et
- un mode de fonctionnement comme générateur dans lequel l'accumulateur d'énergie électrique (21) peut être rechargé par l'entraînement mécanique du vilebrequin (3), à savoir l'entraînement du vilebrequin (3) par un moteur à combustion interne au moyen du moteur à pistons alternatifs et l'entraînement externe du vilebrequin au moyen des roues du véhicule lors de la décélération du véhicule,
**caractérisé en ce que**
• le moteur à pistons alternatifs présente un actionneur de soupape d'échappement variable (24) à commande électrique pour au moins une première soupape d'échappement (25) qui est associée à une première chambre de combustion (26) d'un premier piston (27) couplé à une première bielle (5), conformé de telle manière que l'au moins une première soupape d'échappement (25) peut être ouverte indépendamment de la position du vilebrequin (3),
• le moteur à pistons alternatifs présente un actionneur de soupape d'admission variable à commande électrique pour au moins une première soupape d'admission qui est associée à la première chambre de combustion (26), conformé de telle manière que l'au moins une première soupape d'admission peut être ouverte indépendamment de la position du vilebrequin (3),
• l'unité de commande (22) est conformée de telle manière qu'une commutation régulière entre le mode de fonctionnement comme moteur électrique et le mode de fonctionnement comme générateur a lieu après un certain nombre de tours du vilebrequin (3), et
• l'unité de commande (22) est connectée avec le détecteur de vilebrequin (23), l'actionneur de soupape d'admission variable et l'actionneur de soupape d'échappement variable (24) et conformée de telle manière que dans le mode de fonctionnement comme moteur électrique, l'actionneur de soupape d'admission et l'actionneur de soupape d'échappement (24) fonctionnent dans un mode à deux temps du moteur à pistons alternatifs,
- l'au moins une première soupape d'admission étant ouverte dans une plage de positions du vilebrequin (3) dans laquelle le premier piston (27) s'éloigne de l'au moins une première soupape d'admission et
- l'au moins une première soupape d'échappement (25) étant ouverte dans une plage de positions (28) du vilebrequin (3) dans laquelle le premier piston (27) se rapproche de la soupape d'échappement (25).

2. Système selon la revendication 1, **caractérisé en ce que** le moteur à pistons alternatifs comporte
• un bloc-cylindres (1),
• la chambre de vilebrequin (2) qui est ménagée au moins en partie dans le bloc-cylindres (1),
• le vilebrequin (3) qui est disposé avec possibilité de rotation autour d'un axe géométrique de vilebrequin (4) à l'intérieur de la chambre de vilebrequin (2)
• l'au moins une première bielle (5) qui est supportée avec possibilité de rotation dans un premier coussinet de bielle (6) du vilebrequin (3) et qui effectue, lors de la rotation du vilebrequin (3), un mouvement de bielle dans un espace géométrique de mouvement de la bielle (7),
• une première unité de champ magnétique intérieure (8a ; 34) qui est disposée sur un premier flasque de vilebrequin (9a) du vilebrequin (3) voisin dans le sens axial du premier coussinet de bielle (6) par rapport à l'axe de vilebrequin (4) de telle manière que la première unité de champ magnétique intérieure (8a ; 34) soit orientée vers l'extérieur dans le sens radial par rapport à l'axe de vilebrequin (4) et décrive, lors de la rotation du vilebrequin (3) autour de l'axe de vilebrequin (4), un cercle sur une première trajectoire circulaire géométrique (10a) voisine dans le sens axial de l'espace géométrique de mouvement de la bielle (7), et
• une première unité de champ magnétique extérieure (11a; 37) qui est disposée de façon stationnaire dans la chambre de vilebrequin (2) à distance dans le sens radial de la première trajectoire circulaire (10a),
la première unité de champ magnétique intérieure (8a ; 34) et la première unité de champ magnétique extérieure (11a; 37) étant disposées et conformées de telle manière qu'elles forment ensemble le premier convertisseur électromécanique (12a), en particulier un moteur électrique ou un générateur électrique,
• le premier flasque de vilebrequin (9a) présentant un premier contrepoids (14a) sur un côté tourné vers l'extérieur dans le sens radial par rapport à l'axe de vilebrequin (4) et faisant face au premier coussinet de bielle (6),
• le premier contrepoids (14a) étant fait d'un matériau non magnétisable et
• la première unité de champ magnétique intérieure (8a ; 34) étant disposée sur un côté du premier contrepoids (14a) tourné vers l'extérieur dans le sens radial par rapport à l'axe de vilebrequin (4).

3. Système selon la revendication 1 ou 2, avec
• un organe de réglage de la puissance électrique (30) qui est formé, en particulier, par l'unité de commande électrique (22),
dans lequel
• le moteur à pistons alternatifs comporte
- le premier piston (27), auquel est associé le premier convertisseur électromécanique (12a) disposé sur un côté du premier coussinet de bielle (6) et qui est couplé avec l'au moins une première bielle (5) qui est supportée avec possibilité de rotation dans le premier coussinet de bielle (6) du vilebrequin (3), et
- un deuxième piston (31) auquel est associé un troisième convertisseur électromécanique (12c) disposé sur un côté d'un deuxième coussinet de bielle (33) et qui est couplé avec au moins une deuxième bielle (32) qui est supportée avec possibilité de rotation dans le deuxième coussinet de bielle (33) du vilebrequin (3),
• le premier convertisseur électromécanique (12a) et le troisième convertisseur électromécanique (12c) sont conformés de telle manière que le champ magnétique respectif exerce une force latérale sur le vilebrequin (3) au niveau des coussinets de bielle (6, 33) en question,
• l'organe de réglage de la puissance (30) est monté en circuit électrique avec l'accumulateur d'énergie électrique (21), le premier convertisseur électromécanique (12a) et le troisième convertisseur électromécanique (12c) et conformé de telle manière que le moteur à pistons alternatifs puisse fonctionner dans le mode de fonctionnement comme moteur électrique et/ou le mode de fonctionnement comme générateur,
• dans le mode de fonctionnement comme moteur électrique, le vilebrequin (3) peut être entraîné par la décharge de l'accumulateur d'énergie électrique (21) par un moteur électrique à puissance réglable et
• dans le mode de fonctionnement comme générateur, l'accumulateur d'énergie électrique (21) peut être rechargé à une puissance réglable par l'entraînement mécanique du vilebrequin (3),
**caractérisé en ce que**
l'organe de réglage de la puissance (30) est monté en circuit avec l'accumulateur d'énergie électrique (21), le premier convertisseur électromécanique (12a), le troisième convertisseur électromécanique (12c) et le détecteur de vilebrequin (23) et conformé de telle manière que
• la puissance est distribuée au premier convertisseur électromécanique (12a) avec une première part de puissance et au troisième convertisseur électromécanique (12c) avec une deuxième part de puissance et
• la puissance est distribuée au premier convertisseur électromécanique (12a) et au troisième convertisseur électromécanique (12c) en fonction de la position du vilebrequin (3),
la puissance étant distribuée en fonction de la position du vilebrequin (3) de telle manière que le mouvement du vilebrequin (3), de l'au moins une première bielle (5), de l'au moins une deuxième bielle (32), du premier piston (27) et/ou du deuxième piston (31) réduise ou compense les forces et moments de masse d'ordre supérieur, en particulier de deuxième ordre, par l'application de la force latérale dans une direction perpendiculaire à l'axe de vilebrequin (4).

4. Système selon la revendication 3, **caractérisé en ce que** les forces et moments de masse d'ordre supérieur sont des mouvements de nutation perpendiculairement à l'axe de vilebrequin (4).

5. Système selon la revendication 3 ou 4, **caractérisé en ce que** des unités de champ magnétique intérieures (8a ; 34; 8b) et/ou des unités de champ magnétique extérieures (11a, 11b) des convertisseurs électromécaniques (12a, 12b, 12c, 12d) entourent incomplètement le vilebrequin (3), en particulier d'un seul côté seulement, en particulier en l'entourant sur moins de 360° ou 270°.

6. Système selon la revendication 5, **caractérisé en ce que** les unités de champ magnétique intérieures (8a; 34; 8b) ont chacune la forme d'un segment d'anneau intérieur en arc de cercle entourant le flasque de vilebrequin (9a, 9b) correspondant et chaque segment d'anneau intérieur en arc de cercle s'étend sous un premier angle au centre (α) de moins de 360° ou 270°.

7. Système selon la revendication 5 ou 6, **caractérisé en ce que** les unités de champ magnétique extérieures (11a, 11b) ont chacune la forme d'un segment d'anneau extérieur en arc de cercle entourant la trajectoire circulaire de l'unité de champ magnétique intérieure (8a ; 34) correspondante à distance dans le sens radial et chaque segment d'anneau extérieur en arc de cercle s'étend avec un deuxième angle au centre (β) de moins de 360° ou 270°.

8. Système selon l'une des revendications 3 à 7, **caractérisé en ce que** l'organe de réglage de la puissance (30) est conformé et monté en circuit de telle manière que le moteur à pistons alternatifs puisse fonctionner avec la possibilité de commuter soit dans le mode de fonctionnement comme moteur électrique, soit dans le mode de fonctionnement comme générateur.

9. Système selon l'une des revendications 3 à 8, **caractérisé en ce que**
• le premier piston (27) est associé à un deuxième convertisseur électromécanique (12b) disposé de l'autre côté du premier coussinet de bielle (6),
• le deuxième piston (31) est associé à un quatrième convertisseur électromécanique (12d) disposé de l'autre côté du deuxième coussinet de bielle (33) et
• l'organe de réglage de la puissance (30) est monté en circuit électrique avec le deuxième convertisseur électromécanique (12b) et le quatrième convertisseur électromécanique (12d).

10. Système selon la revendication 9, **caractérisé en ce que**
• le troisième convertisseur électromécanique (12c) correspond au premier convertisseur électromécanique (12a) et
• le quatrième convertisseur électromécanique (12d) correspond au deuxième convertisseur électromécanique (12b).

11. Système selon l'une des revendications 3 à 10, **caractérisé en ce que**
• le système comporte un capteur de vibrations couplé au moteur à pistons alternatifs et monté en circuit avec l'organe de réglage de la puissance pour détecter des vibrations du moteur à pistons alternatifs qui sont provoquées par des forces et moments de masse d'ordre supérieur, en particulier de deuxième ordre, produits par le mouvement du vilebrequin (3), de l'au moins une première bielle (5), de l'au moins une deuxième bielle (32), du premier piston (27) et/ou du deuxième piston (31) et
• l'organe de réglage de la puissance (30) est monté en circuit et conformé de telle manière que la puissance pour réduire ou compenser les forces et moments de masse d'ordre supérieur produits, en particulier de deuxième ordre, est distribuée en fonction des vibrations captées par le capteur de vibrations.
